# EUROPEAN PATENT SPECIFICATION

(11) **EP 1 825 556 B1**
(45) Date of publication and mention of the grant of the patent: **10.05.2017**
(21) Application number: 05856241.4
(22) Date of filing: 14.12.2005
(51) Int. Cl.: H01M 10/04, H01M 10/052, H01M 10/0525, H01M 10/0565, H01M 10/0567, H01M 6/48, H01M 6/40

(54) **LITHIUM-ION BATTERY AND METHOD FOR ITS MANUFACTURE**
LITHIUMIONENBATTERIE UND VERFAHREN ZU IHRER HERSTELLUNG
ACCUMULATEUR AUX IONS DE LITHIUM ET SON PROCEDE DE FABRICATION

(30) Priority: 17.12.2004 JP 2004366233
(43) Date of publication of application: 29.08.2007
(73) Proprietor: NISSAN MOTOR CO., LTD., Yokohama-shi, Kanagawa 221-0023 (JP)
(72) Inventor: SHIMAMURA, Osamu, Yokohama-shi, Kanagawa 233-0015 (JP); KANEKO, Taketo, Atsugi-shi, Kanagawa 243-0123 (JP); SAITO, Takamitsu, Yokohama-shi, Kanagawa 236-0058 (JP); HOSAKA, Kenji, Yokosuka-shi, Kanagawa 238-0023 (JP); HORIE, Hideaki, Yokosuka-shi, Kanagawa 237-0076 (JP)
(74) Representative: Hoefer & Partner Patentanwälte mbB
(86) International application number: PCT/IB2005/003775
(87) International publication number: WO 2006/064344

(56) References cited:
- EP-A- 1 032 059
- WO-A-99/19900
- WO-A-03/065481
- US-A- 5 599 355
- US-B1- 6 645 675

## Description

This application claims priority from Japanese Patent Application No. 2004-366233, filed December 17, 2004, the entire contents of which is incorporated herein by reference.

### TECHNICAL FIELD

The present invention relates to a high-power battery, particularly to a high-power battery suitable as a fuel-cell and a power supply for driving a motor for a hybrid electric vehicle.

### BACKGROUND

In recent years, against the background of the rising environmental protection movement, power supplies for driving a motor and auxiliary power supplies have been under development to facilitate the introduction of electric vehicles (EV), hybrid electric vehicles (HEV), and fuel-cell vehicles (FCV; including hybrid fuel-cell vehicles). Lithium ion secondary batteries, capable of being repeatedly discharged, are used for these purposes. When high power and high-energy density are required, it difficult to make a large battery in a single unit, so it is common to use assembled batteries comprising multiple batteries that are serially connected. It has been suggested to use a thin, laminated lithium ion battery as a single-unit battery comprising such assembled batteries.

The basic structure of a single lithium ion battery making up a battery assembly is one in which an anode and cathode are arrayed with an electrolyte layer as a separator between them, and the electrolyte layer is typically filled with non-aqueous electrolyte solution (liquid electrolyte). The electrolyte layer is typically a porous membrane separator of a polyolefin film, such as, for example, polyethylene (PE) and polypropylene (PP). As a non-aqueous electrolyte solution (liquid electrolyte), those containing LiPF₆, etc., are used.

US6,645,675 discloses a solid polymer electrolyte for lithium ion batteries comprising an inorganic filler such as fumed silica or high surface area alumina particles. WO03/065481 discloses an electrochemical cell including a separation membrane having a supporting body with a polymer membrane and a polymer binder membrane formed thereon. EP1,032,059 discloses a method of making battery in which a part of an anode and a part of a cathode are fixed to a porous film, inserted into an electrolyte and subsequently compressed. US5,599,355 discloses a composite solid electrolyte film in which reinforcing filler particles are uniformly distributed in a suspension process during manufacture.

### SUMMARY

However, to maintain reliability as the battery is placed under tensile stress (tension) during manufacture or use, in a conventional battery the polyolefin film can be made no less than about 10 µm thick. Therefore, when charging and discharging with a large electric current, the transfer distance of lithium ions-which are reactants-becomes longer, internal resistance becomes an influence in that the separator is not involved in the battery reaction in switching to a higher power output, and it is difficult to extract the necessary output from the battery.

In order to effectively utilize these batteries as a power supply for a drive train in a vehicle, it is necessary to plan for switching to a smaller, lighter model battery with higher output. Consequently, it would be desirable to increase the power output of each battery, rather than simply increasing the number of batteries in the battery assembly.

To provide a battery with an increased power output, the electrolyte layer that separates the anode and cathode should be as thin as possible.

In one embodiment, a lithium ion battery includes a cathode, an anode, and an electrolyte layer formed between the cathode and the anode. The cathode, the anode, and the electrolyte layer constitute a cell element. The electrolyte layer includes an arrangement of insulating particles comprising a metal coated with a polymer with a plurality of interstitial spaces therebetween, with electrolytes occupying at least some of the interstitial spaces.

Using such insulating particles, it is possible to make an electrolyte layer that is much thinner than the minimum thickness of the polyolefin film used in conventional battery cell elements. Therefore, the gap between the electrodes can be reduced, and the volume of the pores between the particles can be increased compared to a conventional polyolefin film. Therefore, the power output of the battery can be increased, and necessary energy can be derived even during recharging and discharging with a large current. The insulating particles also function as a separator to maintain the gap between the electrodes so that the facing anode and cathode do not come into contact.

The lithium ion battery described in this disclosure can be used in any application, and the increased cell voltage, high energy density and high output of the lithium ion battery makes it particularly suitable for use in the power trains of vehicles.

In another embodiment, a method for manufacturing a battery includes applying insulating particles comprising a metal coated with a polymer and an electrolytic polymer to form an electrolyte layer, wherein the polymer occupies at least some of a plurality of interstitial spaces between the insulating particles. The method further includes layering the electrolyte layer between a cathode and an anode, wherein the cathode and the anode are facing each other.

In yet another embodiment, a battery assembly includes multiple connected batteries, wherein each of the connected batteries includes layered cell elements including a cathode and an anode that are facing each other, and an electrolyte layer between the cathode and the anode. Lithium ions can be inserted into and removed from the cathode and the anode through the electrolyte layer. The electrolyte layer includes insulating particles comprising a metal coated with a polymer and electrolytes, and the electrolytes occupy at least some of a plurality of interstitial spaces between the insulating particles.

In yet another embodiment, a vehicle has a battery assembly with multiple connected batteries mounted as a power supply for a drive train of the vehicle. Each of the connected batteries includes layered cell elements including a cathode and an anode that are facing each other, and an electrolyte layer between the cathode and the anode. Lithium ions can be inserted into and removed from the cathode and the anode through the electrolyte layer. The electrolyte layer includes insulating particles comprising a metal coated with a polymer and electrolytes positioned such that the electrolytes occupy at least some of a plurality of interstitial spaces between the insulating particles.

In yet another embodiment, a method of manufacturing a lithium ion battery includes applying insulating particles comprising a metal coated with a polymer on a substrate with a first coating means. The method further includes applying an electrolytic polymer in at least some of a plurality of interstitial spaces between the insulating particles with a second coating means to form an electrolyte layer, and layering the electrolyte layer between a cathode and an anode.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1 is a cross-sectional schematic view representing exemplary structure of a bipolar electrode of one embodiment of a bipolar battery consistent with an embodiment of invention.
FIG. 2 is a cross-sectional schematic view representing exemplary structure of a cell layer (unit cell) of the bipolar battery consistent with an embodiment of invention.
FIG. 3 is a cross-sectional schematic view representing an exemplary embodiment of the bipolar battery consistent with an embodiment of invention.
FIG. 4 is a schematic view representing exemplary configuration of the bipolar battery consistent with an embodiment of invention.
FIG. 5A is a simplified cross-sectional view representing an exemplary battery element (cell layer) structure of the battery described herein.
FIG. 5B is a simplified two-dimensional view representing an exemplary electrolyte layer structure revealed when viewed downward from the cross-sectional plane through B-B of FIG. 5A.
FIG. 5C is a simplified cross-sectional view representing the battery element (cell layer) structure of an exemplary conventional battery.
FIG. 5D is a simplified two-dimensional view showing another example of horizontal placement of electrolyte and insulating particles in an exemplary electrolyte layer consistent with an embodiment of the invention.
FIG. 5E is an enlarged plan view representing an example appearance of exemplary insulating particles and electrolyte polymer in one circle obtained by enlarging one circle (comprising a single droplet) in FIG. 5D.
FIG. 6A-6C are simplified two-dimensional views showing three other examples of horizontal placement of electrolyte and insulating particles in the exemplary electrolyte layer.
FIG. 7A is a cross-sectional schematic view representing one embodiment of the distributed pattern of insulating particles in the direction of thickness of the electrolyte layer.
FIG. 7B is a cross-sectional schematic view representing another embodiment of the distributed pattern of insulating particles in the direction of thickness of the electrolyte layer.
FIG. 7C is a cross-sectional schematic view representing an additional embodiment of the distributed pattern of insulating particles in the direction of thickness of the electrolyte layer.
FIG. 7D is a two-dimensional schematic view representing an exemplary appearance of horizontal placement in which the placement pattern of insulating particles along the thickness of the electrolyte layer of FIG. 7C is viewed horizontally.

### DETAILED DESCRIPTION

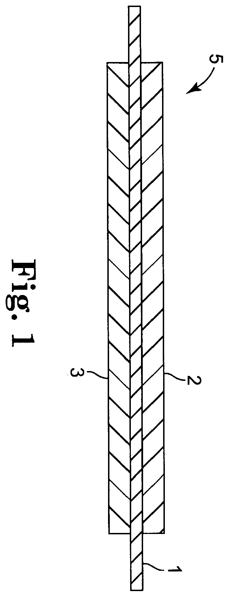

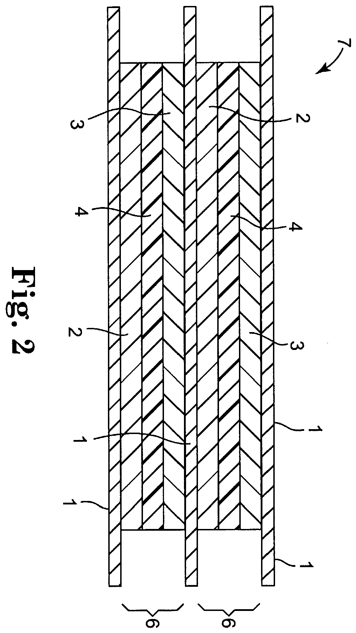

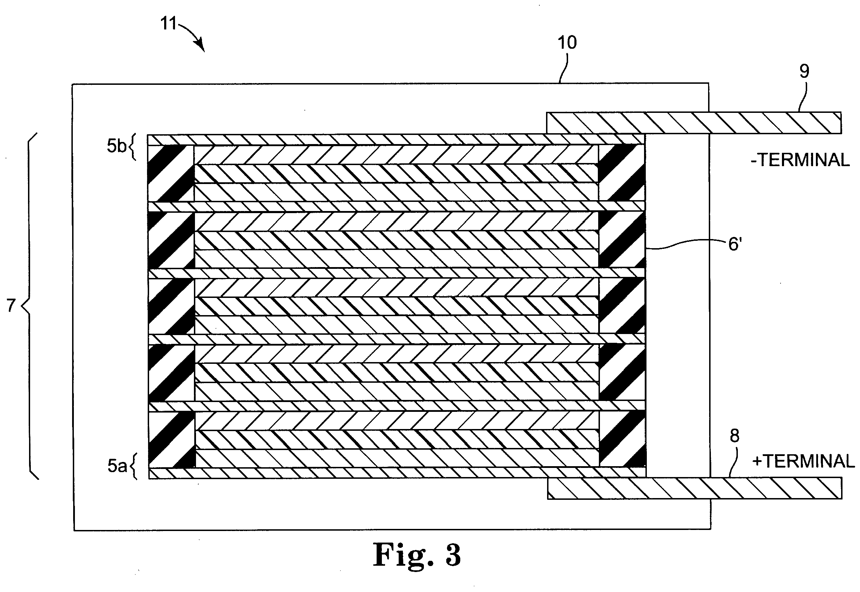

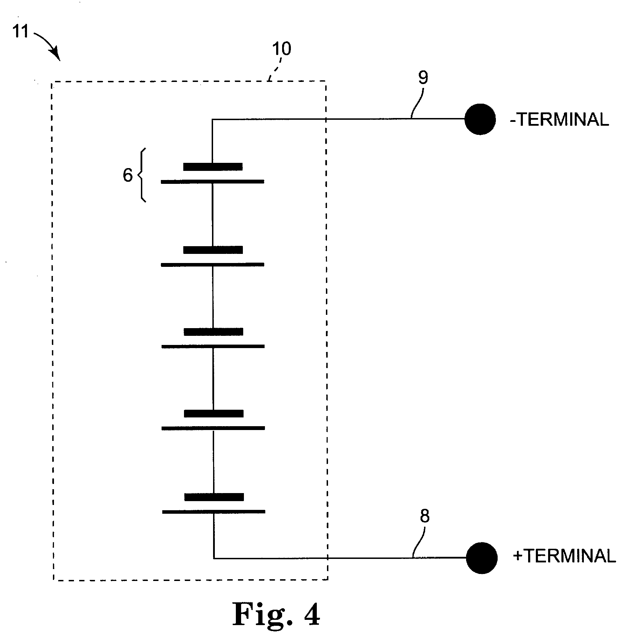

FIGS. 1 to 5A-5E illustrate the overview of the basic configuration of a stacked bipolar lithium ion secondary battery (hereinafter, abbreviated simply as "bipolar battery"). FIG. 1 shows a schematic cross-sectional view illustrating exemplary structure of bipolar electrodes that make up one embodiment of a bipolar battery consistent with an embodiment of invention. FIG. 2 shows a schematic cross-sectional view illustrating exemplary structure of a cell element (hereinafter, also referred to simply as a "cell layer"), wherein an anode and a cathode-in and from which lithium ions can be inserted and removed through an electrolyte layer that makes up a bipolar battery-are facing each other. FIG. 3 shows a schematic cross-sectional view illustrating an exemplary overall structure of the bipolar battery consistent with an embodiment of invention. FIG. 4 shows a schematic diagram conceptually (through symbols) showing one exemplary configuration in which the multiple cell layers that are layered in the bipolar battery are serially connected.

As shown in FIGS. 1 to 4, in the bipolar battery of this invention, a bipolar electrode 5 as shown in FIG. 1, in which an anode 2 is provided on one side of a collector 1, and a cathode 3 is provided on the other side, is placed so that the anode 2 and cathode 3 are facing each other with an electrolyte layer 4 in between. That is, a bipolar battery 11 consists of an electrode layered body (battery element) 7 with a structure in which multiple bipolar batteries 5 that have an anode 2 on one side of the collector 1 and a cathode 3 on the other side are layered with electrolyte layers 4 in between. Moreover, an electrode in the top layer 5a and an electrode in the bottom layer 5b (electrodes to extract the current) of the electrode layered body 7 can be configured to form single-sided electrodes (anode 2 or cathode 3) necessary for the collector 1 (refer to FIG. 3). The electrodes 5a and 5b for extracting the current can also be considered as one of the bipolar electrodes. Moreover, in the bipolar battery 11, an anode lead 8 and cathode lead 9 are respectively joined to the collector 1 or high-current tab of the top layer and bottom layer.

The number of layers in the bipolar electrode is adjusted according to the desired voltage. The number of layers in the bipolar electrode may be lessened if sufficient power can be assured when the thickness of the sheet-shaped battery is as thin as possible.

Moreover, it is preferable for the bipolar battery 11 to have a structure in which the portion of the electrode layered body 7 is sealed under reduced pressure in a battery casing 10 and the electrode leads 8 and 9 are relocated to the outside of the battery casing 10 in order to prevent shock from the outside and environmental degradation when used (refer to FIGS. 3 and 4). In terms of the reduction in weight, it is preferable to have a structure in which polymer-metal composite laminate film is used for casing 10, the electrode layered body 7 is sealed under reduced pressure (hermetically sealed) in the battery casing 10 by fusing part or all of the surrounding parts through thermal adhesion, and the electrode leads 8 and 9 are relocated to the outside of the battery casing 10. The basic configuration of this bipolar battery 11, as shown in FIG. 4, can also be regarded as a configuration in which cell elements 6 (cell layers (unit cells)), wherein an anode and a cathode-in and from which lithium ions can be inserted and removed through an electrolyte layer that makes up the bipolar battery-are facing each other and are serial-connected.

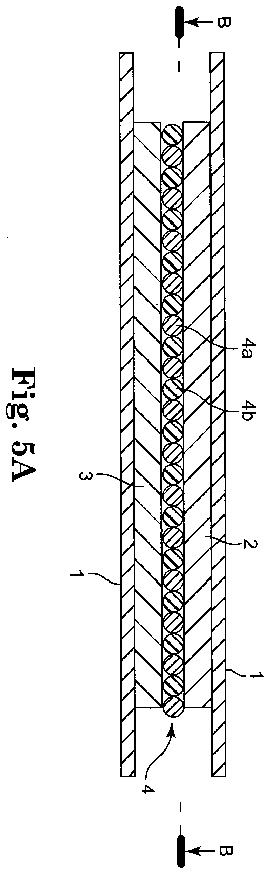

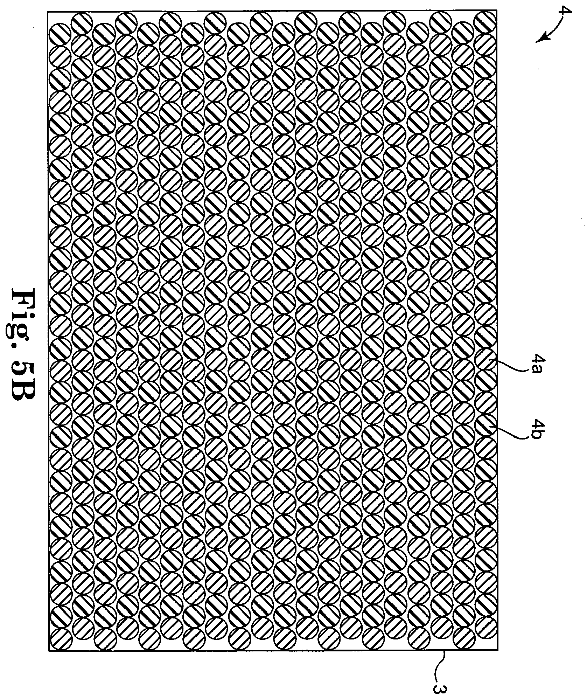

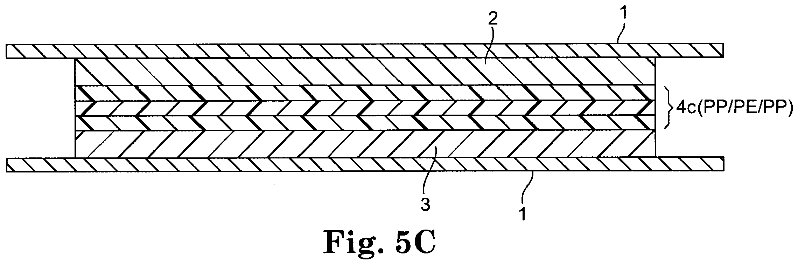

FIG. 5A is a schematic cross-sectional view illustrating the structure of the cell element (cell layer) of the battery in this invention, and FIG. 5C is a schematic cross-sectional view illustrating the structure of the cell element (cell layer) of a conventional battery. FIG. 5B is a view of the schematic plan illustrating the structure of the electrolyte layer when viewed downward from the cross-sectional plane through B-B in FIG. 5A.

In the structure of a conventional battery, as shown in FIG. 5C, the electrolyte layer is layered in between the facing anode 2 and cathode 3. This electrolyte layer 4 consists of separators 4c (in FIG. 5C, the example of the porous membrane film with a three-layer structure of PP/PE/PP) that hold liquid or solid electrolytes (including gel electrolyte).

In a separator such as the separator 4 described above, the minimum thickness of the film is about 10 µm, so higher power output is limited due to the internal resistance of the separator part. Moreover, when solid electrolytes are used for the electrolyte layer 4, and as the thickness of the separator is reduced, handling the separator that holds the solid electrolyte becomes more difficult when layering the separator. Also, there are risks of incorporating air into the interface between the layers of the electrode and the separator, which would lead to a decrease in battery performance. In addition, when solid electrolytes are used for the electrolyte layer 4, the electrolyte layer can be formed without using a separator. However, in this case there is the risk that when the battery is pressed due to vibration, shocks, etc., during handling at the manufacturing stage or while in use, the electrolyte layer may be deformed from pressure. As a result, the facing anode and cathode may come into contact, since the strength of the electrolyte layer for maintaining the gap between the electrodes against such pressure is weak. Furthermore, with gel electrolyte, the gel may get pushed out of the gap between the electrodes by pressure, so it is necessary to improve the adhesive strength of the insulating seal layer provided on the periphery of the gap of the electrodes.

Moreover, in the structure of the lithium battery of the invention, as shown in FIG. 5A, the electrolyte layer 4 is layered between the facing anode 2 and cathode 3. However, the structure of the invention is one in which insulating particles 4a comprising a metal coated with a polymer as a separator substitute material are placed in the electrolyte layer 4 between the anode and cathode, and electrolytes 4b are held in at least some of the interstitial spaces, preferably substantially all of the interstitial spaces, between the insulating particles. As a result, the insulating particles 4a function as a separator, maintaining the gap between the electrodes so that the facing anode 2 and cathode 3 do not come into contact. Moreover, because of this structure, the strength of the electrolyte layer 4 for maintaining the gap between the electrodes against pressure is maintained sufficiently by the insulating particles 4 even when the battery is pressed. Thus, the layer does not deform easily, and the facing anode and cathode do not come into contact. Furthermore, the gel electrolyte is not easily pushed out from the gap between the electrodes by pressure, so it is not necessary to improve the adhesive strength of the insulating seal layer (refer to 6' in FIG. 3) beyond necessity.

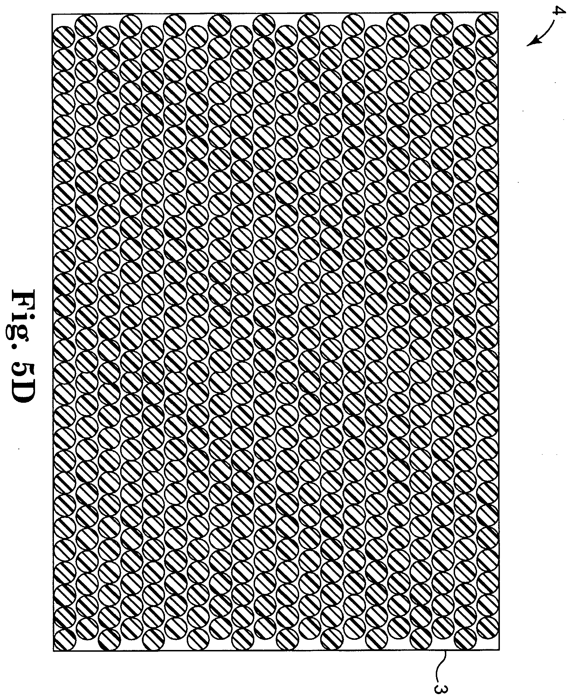

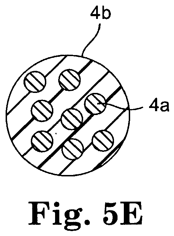

Furthermore, in the lithium ion battery of the invention, as described later, the insulating particles 4a, and even the electrolytes 4b, can be placed using an ink-jet printer. Therefore, the incorporation of air into the interface between the layers of the electrode and the electrolyte layer can be prevented, and the decrease of battery performance can be suppressed effectively. Moreover, the gap between the electrodes can be thinner (shorter) than the minimum thickness of existing separator films by using insulating particles that are smaller than the minimum thickness of the existing separator films for the insulating particles 4a. Particularly when placing insulating particles 4a by means of an ink-jet printer, the gap between the electrodes can be reduced to the particle size of the insulating particle as shown in FIG. 5. Specifically, nano-sized insulating particles can now be manufactured, and it is possible to make the gap between the electrodes, i.e., the thickness of the electrolyte layer, to be 5 µm or less, as described later.

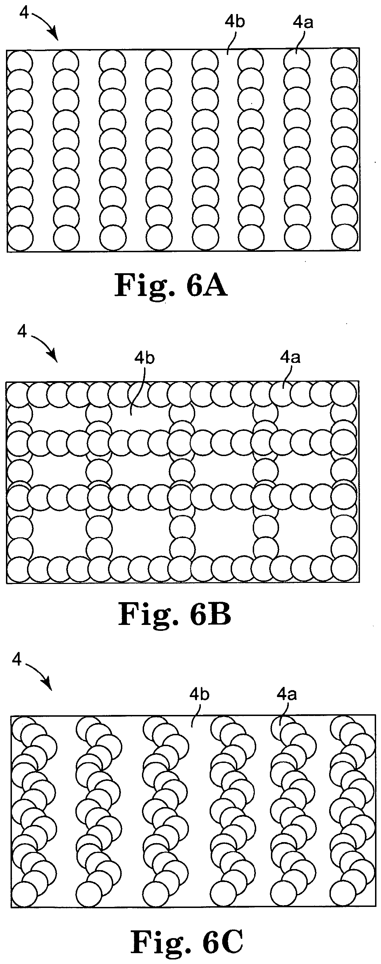

In this invention, the insulating particles are placed so that the facing anode and cathode do not come into contact, so the insulating particles that are a separator substitute material can function as a separator. FIGS. 6A-6C, as well as FIG. 5B, are schematic plan views that illustrate the structure of the electrolyte layer, showing typical examples of the plane arrangement of the insulating particles 4a and the electrolytes 4b in the electrolyte layer 4 when the insulating particles are placed so that the facing anode and cathode do not come into contact.

The arrangement pattern in FIG. 5B is an example of an arrangement in which the insulating particles 4a and electrolyte 4b, which are almost the same size, are alternately placed to form rows, and columns are formed by displacement from the radius of the insulating particles so that the insulating particles 4a (electrolytes 4b) in adjacent rows link with each other. Accordingly, the insulating particles 4a can link with each other, and the strength for maintaining the gap between the electrodes can be assured to the extent that the electrodes do not come into contact even when the battery is pressed due to an external load (such as handling at the manufacturing stage, vibration or shocks received while in use, etc). Furthermore, as described later, it is possible to increase the void ratio of the interstitial spaces between the insulating particles, i.e., the filling ratio (retention ratio) of electrolytes provided between the anode and cathode, aiming for improvement of battery performance. The linkage between insulating particles 4a is simply made by linking the insulating particles 4a so that the insulating particles 4a are fixed by way of solid electrolytes or adhesive materials with the particles in contact with each other, as shown in FIG. 5B.

FIG. 5D is a simplified two-dimensional view showing another example of horizontal placement of electrolyte 4b and insulating particles 4a on the electrolyte layer 4 when insulating particles are placed so that the facing anode and cathode do not come into contact, similar to FIG. 5B.

FIG. 5E is an enlarged plan view representing an example appearance of exemplary insulating particles and electrolyte polymer in one circle obtained by enlarging one circle (comprising a single droplet) in FIG. 5D.

FIG. 6A shows an example in which the adjacent insulating particles 4a are linearly connected with each other to form columns, and the columns are placed in a transverse direction at intervals. This can derive the same effect as that described in FIG. 5B.

FIG. 6B shows an example in which the adjacent insulating particles 4a are connected with each other to form a lattice-like (grid-like) arrangement. This allows the insulating particles 4a to be connected with each other in two dimensions (to become a network), achieving very high strength to maintain the gap between the electrodes to the extent that the electrodes do not come into contact even when the battery is pressed by an external load. Furthermore, there is the advantage that even when tensile stress is applied to the electrolyte layer (a separator substitute material) in the winding direction as in the case of a spiral-wound battery, the necessary strength can be achieved in the winding direction. Moreover, it is possible to further improve the capacity for holding the electrolytes, because the insulating particles 4a are placed around the periphery of the electrolyte layer 4. Therefore, even when electrolytic solution is contained as in the case of gel electrolyte, insulating particles on the periphery of the gap between the electrodes show an insulating sealing effect even when the insulating seal layer is not provided on the periphery; thereby, leaching of the electrolytic solution and contact of the collectors with each other can be prevented. Furthermore, the void ratio of the interstitial spaces between the insulating particles provided between the anode and cathode becomes smaller compared to that of FIG. 5B and FIG. 6A, but it can at least be equal to or greater than the void ratio of the existing separator, aiming for the improvement of battery performance.

FIG. 6C, similarly to FIG. 5B, shows an example in which the adjacent insulating particles 4a are connected with each other in a zigzag to form columns, and the columns are placed in a transverse direction at intervals. This can derive the same effect as that described in FIG. 5B.

In FIGS. 6A-6C, the electrolyte 4b, which is shown homogenously, is electrolytic polymer applied separately by means of a conventional application technique after the insulating particles are placed using an ink-jet printer. This is because the filling efficiency of electrolytes is higher, as the electrolytes are more densely packed and retained with minimum space, and the electrolyte polymer is a liquid with high fluidity, so it is possible to diffuse it more thoroughly into the space between the insulating particles placed previously when it is applied by means of a conventional application method. However, electrolyte 4b may be placed using an ink-jet printer as explained in FIG. 5B.

Moreover, in FIG. 5B, FIGS. 6A and 6C, insulating particles 4a may not be placed around the periphery of the electrolyte layer 4, but rather may be placed so that the edge of the column of the electrolyte forms the periphery of the electrolyte layer 4. This allows gas that may be generated by the electrode reaction during the early stage of charging to move through the row of the electrolyte to be released out of the electrolyte layer 4. As a result, no gas pool is generated between the electrodes, so it may be possible to effectively prevent a decrease in electrode reaction area, which is an advantage. Thus, it is also advantageous that optimum arrangement, which cannot be achieved with existing separators, can be selected from FIG. 6B and FIG. 5B, FIGS. 6A and 6C, according to the intended use of the battery and electrode performance (presence or absence of gas generation), etc.

Moreover, in order to keep the strength for maintaining the gap between the electrodes to the extent that the electrodes do not come into contact when the battery is pressed by an external load, it is sufficient to be aware that the interval (in other words, a portion of the electrolyte 4b) between the lines (rows and columns) that are made up from the insulating particles does not become too wide, and there is not a particular limitation.

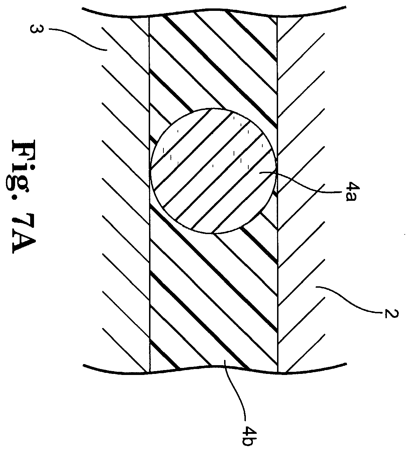

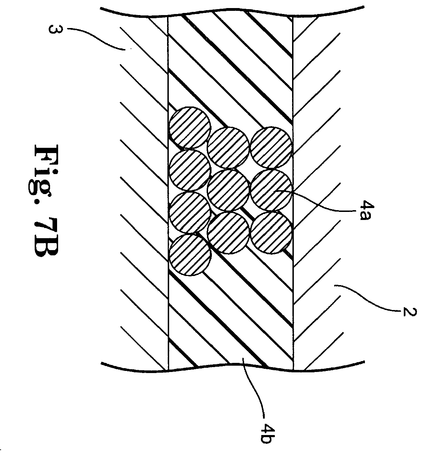

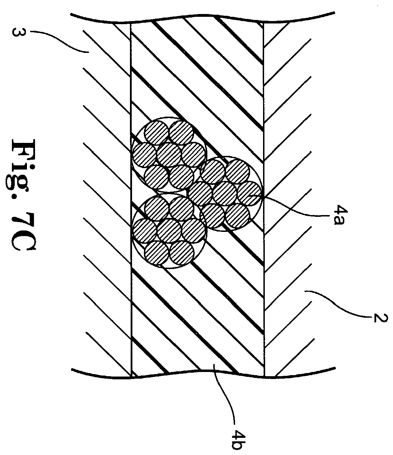

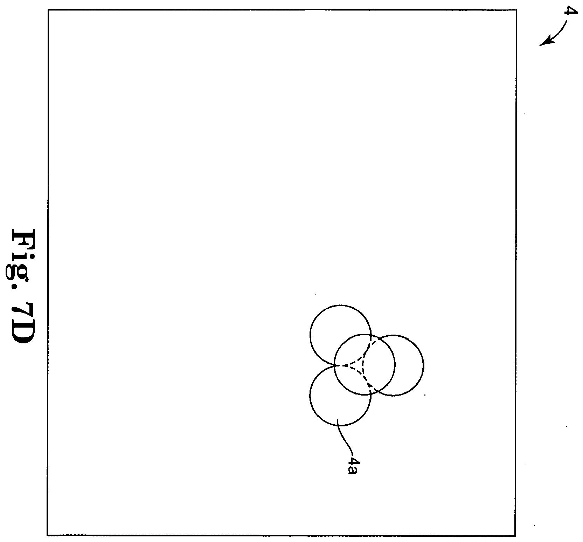

In addition, in this invention, the arrangement is not limited to the above mentioned arrangement patterns. It is sufficient that the insulating particles be placed so that they can function as a separator, or in other words, so that the facing anode and cathode do not come into contact. For example, based on the arrangement patterns in FIG. 5B and FIGS. 6A-6C, at least rows or columns may be inclined at an appropriate angle or be made to form a step-like shape, or the lattice-like formation may be changed to parallel cross- or meshed pattern; thus, the arrangement of insulating particles can be freely changed so that the facing anode and cathode do not come into contact. Therefore, the arrangement pattern of the insulating particles along the plane perpendicular to the thickness direction of the electrolyte layer and the arrangement pattern of the insulating particles to the thickness direction of the electrolyte layer as shown in FIG. 7 to be described later may or may not be homogenous over the plane and the thickness direction. Moreover, the arrangement patterns may be regular or irregular. In addition, the regular arrangement patterns along the plane and in the direction of thickness are not necessary to prevail over the electrolyte layer, and there may be a portion with regularity mixed with an irregular portion within the electrolyte layer. Moreover, in each electrolyte layer of multiple cell layers that make up the battery, the arrangement patterns of the insulating particles along the plane and in the direction of thickness may be the same or different in each cell layer. With regard to such arrangement patterns, it is significantly difficult to design the abovementioned arrangement patterns using porous membrane films that are made from resins or non-woven sheet separators in conventional batteries. However, in this invention, the insulating particles and even electrolytes are placed using an ink-jet printer as described later, which allow for handling a wide variety of arrangement patterns.

Furthermore, it is preferable that there not be a separator, etc., which is not involved in the reaction, between the facing anode and cathode, and that the electrolytes are filled there. However, as described above, sufficient strength cannot be achieved with only electrolyte when the battery is pressed. Therefore, it is necessary to fill as much electrolyte as possible while keeping the strength to the extent that, e.g., short-circuits do not occur when the battery is pressed. In order to achieve that, it is necessary to increase the void ratio in the separator. However, such a separator cannot maintain a film or sheet form as the void ratio (porosity) becomes higher, and also the strength is not sufficient and it becomes more difficult to handle, so there has been a limit in the void ratio (40-50%) for practical use. In this invention, the insulating particles and even electrolytes are placed using an ink-jet printer, so an optimized arrangement pattern for the balance between the strength and the amount of electrolyte (improvement in battery performance) can be achieved.

Specifically, the void ratio of the interstitial spaces between the insulating particles provided between the anode and cathode is preferably 50-90%, more preferably 60-80% with respect to an arrangement with the highly dense electrolyte 4b. Nevertheless, the preferable range of the void ratio depends on the size and arrangement of active material particles (i.e., the degree of concavity and convexity of the surface of the electrodes) or insulating particles, so it is not limited to this range. By making the above void ratio within the range above, the void ratio equal to or greater than the maximum porosity of conventional separators (to the extent that the anode and cathode do not come into direct contact) can be achieved, suppressing an increase in internal resistance due to the separator part, thereby allowing the battery to have higher power output. Specifically, it is possible to take more space for the lithium ions to move from the cathode to the anode (during discharge) compared to that of existing separators (void ratio: 40-50%), so internal resistance due to the separator part can be reduced, thereby making higher power output possible. An increase in internal resistance due to the separator part can be suppressed, so higher power output can be achieved. However, the abovementioned void ratio of the invention is not limited to the range above if it is within a range in which the effect of the invention is not affected, and the range of 20-90% is sufficient for use.

Electrolyte 4b occupies at least some of the interstitial spaces as shown in FIG. 5B and FIGS. 6A-6C, so this part is not left void to make up the battery. Conventionally, in order to compare with the void ratio (porosity) of the separator, the void ratio of the interstitial spaces between insulating particles has been used, but, in fact, electrolyte is placed there, so it can be paraphrased as the filling ratio (retention ratio) of electrolytes.

In this invention, the gap between the electrodes can be thinner (shorter) than the minimum thickness of existing separator films by using insulating particles that are smaller than the minimum thickness of existing separator films as the insulating particles 4a. The thickness can be reduced to about 10 µm at the thinnest by using porous membrane films made from polypropylene (PP) that are now most easily made thinner. However, by using smaller insulating particles as a separator substitute material, as described later, the thickness can be reduced to 10 µm or less, and even to 5 µm or less. In particular, if the ink-jet method is used, uniform application can be achieved using insulating particles with a mean particle size of 0.1 µm or less. On the other hand, if the insulating particles 4a are smaller than the particle size of the anode or cathode active material, the insulating particles can easily go into the active material layer and may not function as a separator substitute material. Therefore, the insulating particle must to be equal to or larger than the particle size of the anode or cathode active material.

In respect to the above, it is sufficient if the mean particle size of the insulating particles is within the range of 0.01 µm or larger and 10 µm or smaller, but preferably within the range of 0.05-10 µm, more preferably 0.05-5 µm, and most preferably 0.1-3 µm.

Moreover, in this invention, by using small insulating particles 4a with the mean particle size described above, it is possible to make the gap between the electrodes (i.e., the thickness of the electrolyte layer) thinner than the minimum thickness (about 10 µm) of the existing separator films. As a result, the power output of the battery can be made higher.

Therefore, the thickness of the electrolyte layer with the insulating particles is preferably 10 µm or less, and more preferably 0.1-5 µm. Existing separators can be made thinner to only about 10 µm. However, with the electrolyte layer 4 of the invention, the thickness of the electrolyte layer 4 can be freely adjusted by appropriately adjusting the mean particle size of insulating particles 4a within the range, and be made thinner to 5 µm or less. Furthermore, if the ink-jet method is used, uniform application can be achieved using insulating particles with a mean particle size of 0.1 µm or less, and the thickness of the electrolyte layer can be made to be 0.1-5 µm. In this case, it is preferable to reduce the concavity and convexity of the surface of the facing anode 2 and cathode 3 and form a uniform, flat surface to make it smooth. In order to do this, it may be the preferable to uniformly apply active material particles and conductive auxiliaries particles with a mean particle size of 1 µm or less also on the anode and cathode using the ink-jet method.

Next, FIGS. 7A-7C show schematic cross-sectional views of an enlarged structure of a portion of the insulating particles expressed as a circle by the symbol 4a in FIG. 5A. FIG. 7D is a schematic plan view of a portion of the insulating particles in FIG. 7C.

As known by the relation between the thickness of the electrolyte layer 4 and the mean particle size of the insulating particles 4a, in this invention, as shown in the FIG. 7A, one insulating particle can be placed in the direction of thickness of the electrolyte layer. In this case, the thickness of the electrolyte layer is equal to the mean particle size of the insulating particles 4a. In other words, each circle expressed by 4a in FIGS. 5A and 5B as well as FIGS. 6A-6C can be regarded as showing one insulating particle. On the other hand, multiple insulating particles 4a can be placed in layers in the direction of thickness of the electrolyte layer (also, in a direction perpendicular to the direction of thickness of the electrolyte layer) as shown in FIGS. 7B and 7C. In other words, each circle expressed by 4a in FIGS. 5A and B as well as FIGS. 6A-6C can be regarded as comprising multiple insulating particles, which are layered in the direction of thickness. That is, it can be the that each circle expressed by 4a in FIGS. 5A and B as well as FIGS. 6A-6C shows a portion of insulating particles placed by applying one or more droplets of ink including insulating particles, which are discharged from an ink-jet printer.

Electrolyte composition and adhesive materials are contained in ink including insulating particles, so the insulating particles are fixed to each other or to the electrodes. Therefore, for example, when the electrolyte composition is contained in ink including insulating particles, as shown in the FIGS. 7A-7C, it is possible to achieve a state in which the electrolyte is filled without spaces between the insulating particles 4a and the periphery of the insulating particles 4a between the electrodes.

As for the arrangement pattern of insulating particles 4a in the direction of thickness, it can be designed arbitrarily, similar to the arrangement pattern along the plane, without being limited to the arrangement pattern shown in FIGS. 7A-7D. For example, the arrangement pattern of insulating particles 4a in the direction of thickness may be made by connecting the particles by means of similarly layering the arrangement pattern along the plane in the direction of thickness, or in a spiral manner, or by making a network with a cubic lattice structure (3-dimensional meshed pattern). Furthermore, they may be linked in a linear manner perpendicularly to or at a given inclination in the direction of the thickness of the electrolyte layer. Furthermore, the insulating particles 4a may be linked in a dendritic structure (3-dimensional structure), so they can be in an arbitral pattern.

In other words, in this invention, by placement using a print application method by which patterning application is possible, especially an ink-jet method, easy placement to form the electrolyte layer 4 may be possible even in a microscopic, complex array. For example, microparticulated insulating particles 4a, as well as even the electrolyte 4b, can be placed easily at any position one-dimensionally (linearly), two-dimensionally (flatly) or even three-dimensionally (stereoscopically), even in a microscopic, complex array to form the electrolyte layer or insulating particle layer. Thus, it is possible to make a thinner separator while maintaining the function of a separator, which has been difficult with existing separators, so the battery power can be made higher without causing an increase in internal resistance or a decrease in the strength of the electrolyte layer. As a result, with the thinner electrolyte layer, it is possible to reduce the increase in inner resistance due to the substitute separator material and to continue stable charging and discharging (power supply), such as being able to extract the necessary energy, even when charging or discharging with a large current. Therefore, it is possible to provide a high power battery suitable for use as a power supply for vehicles. Furthermore, it is possible to reduce the size and weight of the battery, leading to a reduction in total weight and total volume of the power supply for a vehicle.

For the insulating particles 4a, the surface of a metal particle is coated with a polymer.

When metal particles are coated with a single or multiple layer of polymer with alkali resistance, chemical resistance, weather resistance, heat resistance, etc., as required for the separator, those used preferably for existing separators can be used, but are not specifically limited to these. For example, those insulators made from olefin resins such as PP, PE, or a mixture of PP and PE can preferably be utilized in the invention. In particular, those polymers have melting points at around 120-130°C, so they can melt as the temperature of the battery rises in an abnormal situation and block the movement of ions between the anode and cathode, which is another advantage. However, even when other polymers are used, by application with a smaller void ratio (specifically, with the void ratio limited to about 60-50%), microparticles made from the polymers can melt as the temperature of the battery rises and block the movement of ions. As a result, in addition to higher power output, reliability such as a shut-down effect can be achieved as well by using the same materials as existing separators.

With regard to metal particles, there is no limitation specifically, but it is preferable that they be made from a light metal such as aluminum in terms of reduction in weight. Moreover, in terms of strength, iron, stainless steel, etc., are preferable.

For electrolyte 4b that constitutes the electrolyte layer, without any specific limitation, either liquid electrolyte (electrolytic solution) or solid electrolyte can be applied, but preferably solid electrolyte is applied. This is because, if a solid electrolyte is used, it can be used as a material for fixing the insulating particles 4a (i.e., adhesive material). As a result, by holding the insulating particles in the solid electrolyte layer 4, the insulating particles are fixed and the strength of the solid electrolyte layer (membrane) is increased, so a solid electrolyte can be made thinner. In the case of a liquid electrolyte, it is necessary to separately add an adhesive material such as polyvinylidene fluoride (PVDF) and apply it in order to fix the insulating particles 4a to each other and to the electrodes (microscopically, active material particles, etc., on the surface of the electrodes). Otherwise, in the case of a battery installed in a vehicle, for example, when it is subjected to vibration or shocks, the insulating particles move from the positions in which they were initially placed and tend (gather) toward one area in the electrolyte layer, so in other areas, the insulating particles that maintain the gap between the electrodes become fewer in number. In areas having fewer insulating particles, the function as a separator cannot sufficiently be accomplished.

The solid electrolyte includes completely solid electrolyte, completely solid polymer electrolyte, and polymer gel electrolyte. The difference between the completely solid polymer electrolyte and polymer gel electrolyte (also referred to simply as gel electrolyte) is as follows.

1) Polymer gel electrolyte is a completely solid polymer electrolyte, such as polyethylene oxide (PEO), containing electrolytic solution that is used for conventional lithium ion batteries. 2) Polymer gel electrolyte also includes an electrolyte made by maintaining a similar electrolytic solution within the framework of a polymer that does not have lithium ion conductivity such as polyvinylidene fluoride (PVDF). 3) The ratio of the polymer that constitutes the polymer gel electrolyte (host polymer or polymer matrix) and the electrolytic solution ranges widely, and assuming that 100% by weight of the polymer is the completely solid polymer electrolyte and 100% by weight of the electrolytic solution is the liquid electrolyte, everything between the above range constitutes the polymer gel electrolyte. 4) Completely solid polymer electrolytes such as polyethylene oxide (PEO) also further includes those containing lithium salt (electrolyte salt).

The completely solid electrolyte includes ceramic inorganic lithium ion conductors, such as Li₃N, NASICON (Li₁₊ₓAlₓTi₂₋ₓ(PO₄)), perovskite (La_{2/3-x}Li₃ₓTiO₃), and LISICON (Li₄₋ₓGe₁₋ₓPₓS₄). The completely solid electrolyte may also further include lithium salt (electrolyte salt).

The completely solid polymer electrolyte includes, but is not specifically limited to, polyalkylene oxide polymers such as polyethylene oxide (PEO), polypropylene oxide (PPO), and copolymers thereof. This polyalkylene oxide polymer can readily dissolve lithium salts such as BETI, LiBF₄, LiPF₆, LiN(SO₂CF₃)₂, and LiN(SO₂C₂F₅)₂. Moreover, by forming a cross-linked structure, excellent mechanical strength is enabled.

The polymer gel electrolyte refers to a polymer matrix holding electrolytic solution. Specifically, it includes polymers with ion conductivity containing electrolytic solutions that are generally used in lithium ion secondary batteries, and also includes the framework of polymers that do not have lithium ion conductivity, in which similar electrolytic solution is held.

For the polymer matrix of the polymer gel electrolyte, conventional and well-known materials can be used, without any specific limitation. Preferably, it includes polyethylene oxide (PEO), polypropylene oxide (PPO), polyethylene glycol (PEG), polyacrylonitrile (PAN), polyvinylidene fluoride-hexafluoropropylene (PVDF-HFP), poly(methyl methacrylate) (PMMA), and copolymers thereof, and the solvent preferably includes ethylene carbonate (EC), propylene carbonate (PC), γ-butyrolactone (GBL), dimethyl carbonate (DMC), diethyl carbonate (DEC), and mixtures thereof.

Among them, polymers with ion conductivity include well-known solid polymer electrolytes such as polyalkylene oxide polymers, including polyethylene oxide (PEO), polypropylene oxide (PPO), and copolymers thereof. Polyalkylene oxide polymers such as PEO and PPO can readily dissolve lithium salts such as LiBF₄, LiPF₆, LiN(SO₂CF₃)₂, and LiN(SO₂C₂F₅)₂. Moreover, by forming a cross-linked structure, excellent mechanical strength is enabled.

For the polymers that do not have lithium ion conductivity, monomers that form gelatinized polymers such as, for example, polyvinylidene fluoride (PVDF), polyvinyl chloride (PVC), polyacrylonitrile (PAN), and poly(methyl methacrylate) (PMMA) can be used. However, the polymers are not limited to these. PAN, PMMA, etc., belong to a group that has relatively little ion conductivity, and thus can also be categorized as the polymers with ion conductivity. Here, they are exemplified as polymers that do not have lithium ion conductivity, which is used for polymer gel electrolytes.

For the electrolytic solution contained in the polymer gel electrolyte, conventional and well-known materials can be used, without any specific limitation. It is sufficient as long as they are generally used in lithium ion batteries, and for example, those containing lithium salt (electrolyte salt) and organic solvent (plasticizer) can be used. Specifically, usable electrolytic solutions include those in which at least one kind of lithium salt (electrolyte salt or supporting salt)-chosen from the anionic salts of inorganic acids, such as LiPF₆, LiBF₄, LiClO₄, LiAsF₆, LiTaF₆, LiAlCl₄, and Li₂B₁₀Cl₁₀, and anionic salts of organic acids, such as LiCF₃SO₃, Li(CF₃SO₂)₂N, and Li(C₂F₅SO₂)₂N-is contained, and organic solvents (plasticizer) such as aprotic solvent, which is at least one type chosen from, or a mixture of two or more, cyclic carbonates such as propylene carbonate and ethylene carbonate; chain carbonates such as dimethyl carbonate, methylethyl carbonate, and diethyl carbonate; ethers such as tetrahydrofuran, 2-methyltetrahydrofuran, 1,4-dioxane, 1,2-dimethoxyethane, and 1,2-dibutoxyethane; lactones such as γ-butyrolactone; nitriles such as acetonitrile; esters such as methyl propionate; amids such as dimethylformamide; methyl acetate and methyl formate. However, the electrolytic solution is not limited to these examples.

The ratio (mass ratio) of the host polymer in the polymer gel electrolyte and the electrolytic solution can be determined according to intended use, etc., but from the respect of ion conductivity, ranges from 2:98 to 90:10. In other words, leaching of the electrolyte from the periphery of the electrode active material layer can be effectively prevented through sealing by providing an insulating layer or insulated part. Therefore, with regard to the ratio (mass ratio) of the host polymer in the polymer gel electrolyte and the electrolytic solution, it is possible to relatively prioritize the battery characteristics. In particular, the effect can be derived with, specifically, a polymer gel electrolyte with high electrolytic solution content, which is 70% by weight or more.

The amount of the electrolytic solution contained in the polymer gel electrolyte may be quasi-uniform, or may be reduced gradually from the center to the periphery. The former is preferable because reactivity can be achieved within a wider range. The latter is preferable in that the sealing property against electrolytic solutions can be further improved when insulating sealing is required at the periphery of the electrolyte layer, as in the case of bipolar batteries. To reduce the electrolytic solution gradually from the center to the periphery, it is preferable to use polyethylene oxide, polypropylene oxide and the copolymer thereof, which have lithium ion conductivity, for the host polymer or polymer matrix.

The liquid electrolyte refers to those for which the same electrolytic solution as that for the polymer gel electrolyte can be used, and those that contain lithium salt (electrolyte salt or supporting salt) and organic solvent (plasticizer) can be used. Further explanation is omitted here, because it is as described with regard to the electrolytic solution used for the polymer gel electrolyte.

In the electrolyte 4b, various additives can be contained in appropriate amounts if necessary. The additives include, for example, trifluoropropylene carbonate for improving battery life and performance, and various fillers as reinforcing materials.

Next, for the method of manufacturing the lithium ion battery in this invention, any means for applying insulating particles to an electrolyte layer, means for applying the electrolytic polymer to the electrolyte layer, and means for layering the electrolyte layer between the cathode and the anode may be employed as long as the electrolyte layer can be provided with insulating particles as a separator substitute material between the anode and cathode. Preferably, such means include the spray coating method, screen printing, ink-jet printing application method, methods using the airbrush method, etc. Also, application means using a coater, and most preferably, means of application using the ink-jet method, i.e., application methods in which insulating particles are placed by means of an ink-jet printer, may be used. This is because electrolytic polymers containing insulating particles cannot be applied thinly due to the limitation in thickness control with conventional application methods using a coater; however, with application using the ink-jet method, the insulating microparticle layer (electrolyte layer) can be applied thinly and uniformly. Moreover, the patterning application of a microstructure of insulating particles, which cannot be formed with conventional application techniques using a coater, can be carried out easily, which is one reason for the above.

Furthermore, neither preparation of a different screen for each pattern, as needed in the case of screen printing, nor replacement is necessary. In other words, it is only necessary to change the planar or configurational composition of components in the electrolyte layer and colors (ink to be applied) corresponding to materials on the print screen of the computer software (print software) connected to the ink-jet printer. For example, it is only necessary to change the arrangement pattern of the insulating particles 4a and the electrolyte 4b as well as the colors (i.e., ink to be applied) corresponding to the portion of each insulating particle 4a and electrolyte 4b (interstitial spaces), as shown in FIG. 5B and FIGS. 6A-6C. In other words, when changing the composition of components and materials, it is only necessary, if required, to replace ink cartridges in the ink-jet printer, or to add or reduce the number of cartridges according to changes made in the color display on the print screen, so it is possible to respond to design changes quite easily. The ink used in this specification shall refer to raw material slurry obtained by adjusting the viscosity of the raw material used for forming the electrolyte layer, and even the anode layer and cathode layer (further including adhesive materials and electrolyte polymer, etc.) using an appropriate solvent, as required.

For example, as described later, for solid electrolyte batteries in which solid electrolyte is used for the electrolyte layer, insulating particles and solid electrolyte (electrolytic polymer) may be applied as one ink using the ink-jet method. In this case, it is only necessary to prepare ink for forming the electrolyte layer containing insulating particles that constitute the electrolyte layer, materials such as electrolytic polymer, and even solvents for the adjustment of viscosity as required. Alternatively, the insulating particles and electrolytic polymer may be applied separately using the ink-jet method. In this case, it is only necessary to separately prepare the ink for electrolyte containing the electrolytic polymer and the solvent for the adjustment of viscosity and the ink for insulating particles containing the insulating particles, solvent, and even adhesive materials (this may be a solid electrolyte) as required, so appropriate adjustment can be carried out for intended use.

Here, the ink-jet printing application method (ink-jet method) is a method by which the ink for forming the electrolyte layer, the ink for electrolyte, the ink for insulating particles, etc., are applied in droplets on the electrode (or base material film) through the nozzle of a ink-jet printer. As a result, a uniform, thinly-applied membrane can be formed as desired in any given area on the electrode, and the ink for forming the electrolyte layer, ink for the electrolyte, or ink for insulating particles can be applied in an optimal pattern.

The ink-jet method includes the piezo element method, thermal ink-jet method, and continuance method, any of which can be employed, but from the aspect of the thermal stability of battery materials, it is preferable to use the piezo element method. The piezo element method refers to the method of using piezo elements, which is also generally known as the drop-on-demand method, in which liquid is expelled using ceramics (piezo elements) that deform when voltage is applied. The piezo element method is advantageous for thermal stability of materials that constitute the electrolyte layer, which are contained in ink for forming the electrolyte layer, ink for the electrolyte, ink for insulating particles, etc., and the amount of each ink to be applied can be changed. Furthermore, it is advantageous in that liquid with a relatively high viscosity can be expelled more surely, stably and precisely compared to the case using the other ink-jet head, and liquid with viscosity of around 10-100 Pa s (100 cp) can be expelled effectively.

In piezo-type ink-jet heads, generally, liquid chambers for storing each ink are formed, having a structure in which the ink feeder is linked to the liquid chambers. In the lower part of the ink-jet head, many nozzles are formed and aligned. Moreover, in the upper part of the ink-jet head, a piezoelectric element for expelling the ink in the liquid chamber through the nozzle, and a driver for operating this piezoelectric element are provided. Such an ink-jet head construction is just one embodiment, and there is no specific limitation.

When the ink feeder is made from plastic, the solvent contained in each ink may dissolve the plastic parts. Therefore, the ink feeder is preferably made from metals that have superb solvent resistance.

The method for applying each ink using the ink-jet method is not limited specifically. For example, there is a method of applying droplets on the electrode (or base material) in an optimal pattern by providing one ink-jet head for each ink and controlling the liquid injection operation of each of the multiple small-diameter nozzles independently. Alternatively, there is a method of applying droplets onto the electrode (or base material) in an optimal pattern by providing multiple ink-jet heads for each ink and controlling the liquid injection operation of these ink jet heads independently. With such application methods, the desired optimal pattern can be formed within a short amount of time. Moreover, in such application methods, there is no specific limitation in controlling the liquid injection operation independently. For example, such operations may be carried out through electrical signals from appropriate software after connecting an ink-jet printer that uses the ink-jet head with a commercially available computer, etc., and creating the desired pattern using such software. For appropriate software, commercially available software such as PowerPoint (manufactured by Microsoft Corporation) or AutoCad (manufactured by Autodesk, Inc.) can be used. However, it is not limited to commercially available software, and any newly developed software may be used.

Moreover, the usable viscosity of each ink at 25°C is 0.1-100 cP, preferably 0.5-10 cP, and more preferably 1-3 cP. This range is preferable because it may be difficult to control the flow rate if the viscosity of each ink is less than 0.1 cP, and it may be impossible for the ink to pass through the nozzle if it is over 100 cP.

Moreover, as a means for drying each ink applied onto the electrode (or base material), it is only necessary to dry it at 20-200°C, and preferably at 80-150°C, within a normal atmosphere, but preferably in a vacuum atmosphere, for 1 minute to 8 hours, but preferably for 3 minutes to 1 hour. However, the means for drying is not limited to this, and can be determined appropriately according to the content of the solvent, etc., contained in each ink applied.

The means for polymerizing and hardening (cross-linking) polymer materials (solid electrolyte materials) contained in each ink as required can be determined appropriately according to the polymerization initiator. For example, when using a photo polymerization initiator, ultraviolet light is irradiated at 0-150°C, but preferably at 20-40°C, in an inert gas atmosphere such as argon and nitrogen, but preferably in a vacuum atmosphere, for 1 minute to 8 hours, but preferably for 3 minutes to 1 hour.

The means of application of the electrolytic polymer and the insulating particles using the ink-jet method is not limited to these specific examples. For example, after applying and drying each ink without adding solid electrolyte into the ink, it may be impregnated with an electrolytic solution or may be applied with gel electrolyte slurry. This impregnation method is not specifically limited, and supplying in minute amounts is possible if an applicator or coater is used (refer to FIG. 6). Furthermore, the patterning application of each ink can be carried out on the base material, rather than on the electrode, to form the electrolyte layer. In this case, it is only necessary to layer the electrode on the electrolyte layer, following the patterning application of each ink and forming the electrolyte layer.

Thus, the method for forming the electrolyte layer is not limited specifically as long as the insulating particles are placed using an ink-jet printer, and existing manufacturing methods for the electrolyte layer can be widely used, and it can be determined appropriately according to the type of battery.

In particular, for solid electrolyte batteries in which solid electrolyte is used for the electrolyte layer, (1) insulating particles and electrolytic polymer may be applied simultaneously using the ink-jet method (refer to FIGS. 5D and E). Alternatively, (2) insulating particles and electrolytic polymer may be applied separately using the ink-jet method (refer to FIGS. 5A and 5B).

In the embodiment of the aforementioned (1), application speed can be increased by making insulating particles and electrolytic polymer into a single ink. In that embodiment, as in the schematic plan view of the electrolytic layer 4 shown in FIGS. 5D and 5E, insulating particles 4a and electrolytic polymer 4b are placed on the entire surface of the electrolyte layer contained in each droplet (in each circle shown in FIG. 5D) from the ink-jet printer. As an example of manufacturing for this embodiment, ink is prepared preliminarily by mixing the solid electrolyte (polymer) and insulating particles to obtain desired porosity, and this ink can be applied on the surface of the electrode (anode or cathode) to make the electrolyte layer, and even the battery.

In the embodiment of the aforementioned (2), it is possible to make the current density in the cell uniform because the insulating particles and electrolytic polymer can be placed on any position. As a result, it is possible to aim for even higher power output and longer battery life. As an example of manufacturing for this embodiment, ink containing the polymer and solvent as well as ink containing insulating particles, solvent, and adhesive materials (this may be an electrolytic polymer) are prepared, and are applied onto the anode or cathode by ink-jet so that the ratio of the polymer and the microparticles becomes 50-90% to form a battery.

Furthermore, in addition to the embodiments of the aforementioned (1) and (2), for example, insulating particles are applied onto the anode or cathode using an ink-jet printer so that the void ratio of the interstitial spaces between the insulating particles provided between the anode and cathode becomes 50-90%. By drying this, the insulating particles as a separator substitute material are fixed onto the anode or cathode using adhesive materials or solid electrolyte, etc., so an electrode-in which the electrode and, separator substitute material are combined-is made. The solid electrolyte slurry is applied in the interstitial spaces using existing application methods other than the ink-jet method (e.g., screen printing method, airbrush method, bar coater method, etc.), and the electrolyte layer is formed on the electrode by drying (physical cross-linking) or polymerizing and hardening (chemical cross-linking) (refer to FIG. 6). Alternatively, for liquid electrolyte batteries in which liquid electrolyte is used for the electrolyte layer, after an electrode in which the electrode and separator substitute material are combined is made similarly to the above, the other electrode is attached to it to make an electrode layered body (in which the electrolyte is not filled). Subsequently, after enclosing it in the battery casing by means of an existing assembly process, the electrolytic solution is injected into the interstitial spaces between the electrodes by means of an existing vacuum injection method, thereby desired forming an electrolyte layer to complete the desired battery. However, in this invention, the manufacturing method is not limited to these methods.

Moreover, for the solvent used for the ink that is used in the ink-jet method, without specific limitation, the same solvent as conventional solvents for adjusting viscosity can be used, and furthermore, solvents such as acetonitrile and dimethyl carbonate can also be used.

The explanation above is mainly for electrolyte layers provided with insulating particles as a separator substitute material between the anode and cathode, which is a component characteristic of batteries according to this invention. The other components of the lithium ion battery of the invention can be applied widely to conventional and well-known lithium ion batteries without specific limitation.

Hereinafter, each component of the lithium ion battery in this invention will be explained; however, it is obvious that the invention is not limited to the explained components. In other words, in this invention, the components of the stacked bipolar lithium ion secondary battery that is one of the preferred embodiments of the lithium ion battery explained in FIGS. 1-4 are the same as those of the non-bipolar lithium ion secondary battery, except for the electric connection mode (electrode structure) in the battery. Therefore, the components will be collectively explained below. Nevertheless, it is obvious that this invention is not limited to components.

For the collector component that can be used in this invention, conventional and well-known collectors can be used without specific limitation. For example, aluminum foil, stainless steel (SUS) foil, cladding material of nickel and aluminum, cladding material of copper and aluminum, cladding material of SUS and aluminum, or plating material of a combination of these metals can preferably be used. Alternatively, a collector coated with aluminum on its metallic surface may be used. Furthermore, in certain instances, collectors made by attaching two or more metal foils may be used. From the aspect of corrosion resistance, ease of making, economical efficiency, etc., it is preferable to use aluminum foil as a collector.

When using the collector, and when using the anode and cathode collectors separately, as a material for the anode collector, conductive metals such as aluminum, aluminum alloy, SUS, and titanium can be used, and in particular, aluminum is preferable. On the other hand, as a material for the anode collector, conductive metals such as copper, nickel, silver, and SUS can be used, and in particular, SUS and nickel are preferable. Moreover, it is only necessary to electrically connect the anode collector and cathode collector directly or via an intermediate layer with conductivity induced by a third material in between.

Furthermore, in this invention, a collector formed as a thin film into a desired shape using thin-film-manufacturing technology such as spray coating, screen printing method, and ink-jet method can be used. For example, such a collector is formed by heating a collector metal paste containing a metallic powder as the main component, such as aluminum, copper, titanium, nickel, stainless steel (SUS), and alloys thereof, and also contains binder (resins) and solvent. With regard to such metallic powder, any powder of a single type of metal may be used independently, or a mixture of two or more types of metallic powder may be used, or each different type of metallic powder may be multiply layered utilizing characteristics of the manufacturing method. For the binder, without specific limitation, a conventional and well-known resin binder material such as epoxy resin can be used, and furthermore, conductive polymer material can also be used.

The thickness of the collector may be conventional without specific limitation, which is approximately 1-100 µm. From the aspect of a thinner electrode, the thickness of the collector is preferably 100 µm or less, but more preferably 1-50 µm.

The anode contains an anode active material. In addition, conductive auxiliaries for improving electron conductivity, lithium salt for improving ion conductivity, binder (also referred to as binding agent), solid electrolyte (materials), additives, etc., may be contained.

Among these, for the anode active material, materials capable of use for existing lithium-ion secondary batteries can be used without specific limitation. Preferably, it is composite oxide of transition metals and lithium (lithium-transition metal composite oxide), because batteries that excel in capacity and power output characteristics can be made. Specifically, this includes Li-Co composite oxides such as LiCoO₂, Li-Ni composite oxides such as LiNiO₂, Li-Mn composite oxides such as spinel LiMn₂O₄ and LiMnO₂, Li-Cr composite oxides such as Li₂Cr₂O₇ and Li₂CrO₄, Li-Fe composite oxides such as LiFeO₂ and LiₓFeO_{y}, Li-V composite oxides such as LiₓV_{y}O_{z}, and the substituted oxides thereof in which the above transition metals are partially substituted by another element (e.g., LiNiₓCo₁ - ₓO₂ (0<x<1)), but this invention is not limited to these materials.
These lithium-transition metal composite oxides excel in reactivity and cycle durability, and are low-cost materials. Therefore, it is advantageous in that batteries that excel in power characteristics can be formed by using these materials for the electrode. For bipolar batteries, Li-Mn composite oxides are preferable among anode active materials. This is because the profile can be inclined by using Li-Mn composite oxides, leading to an improvement in reliability in abnormal situations. There is the advantage that, as a result, the detection of voltage in each cell layer as well as the entire bipolar battery becomes easier. In addition, phosphate compounds of transition metals and lithium, such as LiFePO₄, or sulfate compounds of transition metals and lithium; transition metal oxides or sulfates, such as V₂O₅, MnO₂, TiS₂, MoS₂, and MoO₃; and PbO₂, AgO, NiOOH, etc., can also be used.

The cathode contains an cathode active material. In addition, conductive auxiliaries for improving electron conductivity, lithium salt for improving ion conductivity, binder, solid electrolyte (materials), additives, etc., may be contained.

Among these, for the cathode active material, materials that can be used for existing lithium-ion secondary batteries can be used without specific limitation. Specifically, carbon, metal compounds, metal oxides, lithium metal compounds, lithium-metal composite oxides, boron-added carbon, etc., can be used. Among these, one kind may be used independently, or a combination of two or more of these may be used. Preferably, carbon or lithium-transition metal compounds are used. This is because batteries that excel in capacity and power output characteristics (e.g., higher battery voltage) can be made using these. Additionally, for lithium-transition metal composite oxides, for example, lithium-titanium composite oxides that can be expressed as LiₓTi_{y}O_{z}, such as Li₄Ti₅O₁₂, can be used. Moreover, for carbon, various natural graphite and artificial graphite-for example, graphites such as fibrous graphite, flake graphite and spheroidal graphite, graphite carbon, hard carbon, soft carbon, acetylene black, carbon black, etc.-can be used. Furthermore, for metal oxides, for example, transition metal oxides such as SnO, SnO₂, GeO, GeO₂, In₂O, In₂O₃, PbO, PbO₂, Pb₂O₃, Pb₃O₄, Ag₂O, AgO, Ag₂O₃, Sb₂O₃, Sb₂O₄, Sb₂O₅, SiO, ZnO, CoO, NiO, and FeO, in addition to titanium oxides, can be used. The metal compounds include LiAl, LiZn, Li₃Bi, Li₃Cd, Li₃Sd, Li₄Si, Li_{4.4}Pb, Li_{4.4}Sn, Li_{0.17}C(LiC₆), etc. Li metal compounds include Li₃FeN₂, Li_{2.6}Co_{0.4}N, Li_{2.6}Cu_{0.4}N, etc. The boron-added carbon includes boron-added carbon, boron-added graphite, etc. However, in this invention, conventional and well-known materials can be used accordingly, without being limited to the above.

The boron content in the boron-added carbon is preferably, but not limited to, 0.1-10% by weight. For bipolar batteries, the cathode active material is preferably selected from crystalline carbon materials and non-crystalline carbon materials. This is because the profile can be inclined by using these, and the detection of voltage in each cell layer as well as the entire bipolar battery becomes easier. The crystalline carbon materials described here refer to graphite carbon materials in which the graphite carbon, etc., is included. Non-crystalline carbon materials refer to hard carbon materials in which hard carbon, etc., is included.

The anode and cathode will be explained collectively as electrodes (anode and cathode) below, because there is no difference between the anode (anode active material layer) and cathode (anode active material layer), except for the type of active material.

It is preferable to make insulating particles function as a separator without going into spaces in the concavity and convexity on the surface of the electrode, even when the electrode is made thinner to become 5 µm or less by flattening the surface of the electrode through application and formation using the ink-jet method for the electrodes (anode and cathode). In order to achieve this, it is necessary to adjust the mean particle size of the electrode active material so that the range of mean particle size of the insulating particles becomes equal to or larger than the mean particle size of the electrode active material. Thus, it is preferable to microparticulate the electrode active material so that it can be applied using the ink-jet method, leading to making thinner electrodes, and even to providing higher power output batteries that can be used as the power supply for a vehicle's drive.

With respect to the above, the mean particle size of the electrode (anode and cathode) active materials is 10 µm or less, preferably 5 µm or less, more preferably within the range of 0.05-5 µm, and even more preferably within the range of 0.05-1 µm. On the other hand, in the event that the mean particle size of the electrode (anode and cathode) active materials exceeds 10 µm, it becomes difficult to flatten the surface of the electrode, leading to a difficulty in making the electrode layer thinner to become 5 µm or less, etc., so there is a possibility that the effect of the invention cannot be fully enabled. Furthermore, it becomes difficult to achieve even thinner electrode. The lower limit of the mean particle size of the active material microparticle is not limited specifically, but if it is less than 0.05 µm, it is difficult to make, and thus it may be impossible to obtain preferable discharging characteristics.

The conductive auxiliaries for improving electron conductivity include acetylene black, carbon black, graphite, various carbon fibers, and carbon nanotubes. However, they are not limited to these. Regarding the mean particle size of the conductive auxiliaries, it is preferable to microparticulate them so that they can be applied using the ink-jet method, leading to making thinner electrodes, and even to providing higher power output batteries that can be used as the power supply for a vehicle's drive. From the above reason, the mean particle size of the conductive auxiliaries is 1 µm or less, but preferably 0.05-0.1 µm. In the event that the mean particle size of the conductive auxiliaries exceeds 1 µm, it becomes difficult to achieve an even thinner electrode. On the other hand, the lower limit of the mean particle size of the conductive auxiliaries is not limited specifically to the aspect of making even thinner electrodes.

Moreover, the content (mass ratio) of the conductive auxiliaries in each electrode (anode or cathode) is determined appropriately, according to the particle size of the conductive auxiliaries or electrode active materials, etc. For example, when the mean particle size of the electrode active material is 1 µm or less, the content (mass ratio) of the conductive auxiliaries is within the range of 2-10% by weight, but preferably 4-6% by weight, to the total amount of each electrode (anode or cathode). In the event that the content (mass ratio) of the conductive auxiliaries exceeds 10% by weight, there is a possibility that the utilization ratio may become lower, and the conductive auxiliaries may cover the entire surface of the active material, leading to a decrease in ion conductivity. In the event that the ratio (mass ratio) of the conductive auxiliaries is less than 2% by weight, it may be difficult to ensure sufficient electronic conductivity.

For the lithium salt for improving ion conductivity, for example, anionic salts of inorganic acids such as LiPF₆, LiBF₄, LiClO₄, LiAsF₆, LiTaF₆, LiAlCl₄, and Li₂B₁₀Cl₁₀; anionic salts of organic acids such as LiCF₃SO₃, Li(CF₃SO₂)₂N, and Li(C₂F₅SO₂)₂N (lithium bis(perfluoroethylene sulfonyl imide); also described as LiBETI), LiBOB (lithium bis oxide borate); or a mixture thereof can be used. However, it is not limited to these.

For the binder, polyvinylidene fluoride (PVDF), SBR (styrene-butadiene rubber), polyimide, etc., can be used. However, it is not limited to these.

When solid electrolytes are used for the electrolyte layer, it is preferable that the electrolyte is contained in the electrode (anode or cathode). This is because ion conduction can be carried out more smoothly among the electrodes by filling the electrolyte into the spaces between the electrode active materials or conductive auxiliaries, etc., among the electrodes, leading to the improvement of the power output of the entire battery. On the other hand, when using liquid electrolyte (electrolytic solution) or gel electrolyte (a type of solid electrolytes) for the electrolyte layer, the electrode does not necessarily contain the electrolyte, and it is only necessary for the electrode to contain conventional and well-known binder material for binding the electrode (anode or cathode) active materials to each other. In this case, when the electrolytic solution is impregnated by injection, or the gel electrolyte is held, into the interstitial spaces between insulating particles that are separators substitute materials provided between the anode and cathode, the liquid electrolyte (electrolytic solution) or the electrolytic solution in the gel electrolyte is also diffused into the interstitial spaces between the respective electrode active materials or conductive auxiliaries microparticles, etc., in respective electrodes, so it can be the that it is not always necessary to have the electrode contain further electrolyte. However, it is obvious that, even in such a case, the electrode may contain solid electrolyte as required according to intended use.

Explanation of the solid electrolyte is omitted here, because it is the same as described with regard to the electrolyte used for the electrolyte layer.

The content of the electrolytic solution in the gel electrolyte contained in each electrode (anode or cathode) can be determined according to intended use, and is preferably in the range of a few percent by weight to 98% by weight for usability. However, it is not limited to this range. In particular, this invention is effective in gel electrolytes with high electrolytic solution content, which is 70% by weight or more. This is because, with such content, excellent battery characteristics such as having ion conductivity that is close to that of liquid electrolyte-type lithium-ion secondary batteries can be enabled, and high sealing performance can be maintained by molding and placing resins for sealing on a separator, even for a large amount of electrolytic solution, leading to the effective prevention of leaching of electrolytic solution.

The additives may include, for example, trifluoropropylene carbonate for improving the battery life and performance, and various fillers as reinforcing materials. The blending quantity in the electrode of the electrode active material, conductive auxiliaries, binder, electrolyte material (polymer matrix, electrolytic solution, etc.), lithium salt, additives, etc., should be determined in consideration of the intended use of the battery (emphasis on power, emphasis on energy, etc.). For example, when a solid electrolyte is used for the electrolyte layer, if the blending quantity of the solid electrolyte in the electrode is too small, ion conduction resistance and ion diffusion resistance become larger, and battery performance degrades. On the other hand, if the blending quantity of the solid electrolyte in the electrode is too large, the energy density of the battery degrades. Therefore, the ideal amount of solid electrolyte for the purpose should be determined after considering these factors.

The thickness of the electrode is not specifically limited and should be determined upon consideration of the intended use of the battery (emphasis on power, emphasis on energy, etc.), as described regarding blending quantity. When a general application method is used, the thickness of the electrode is around 10-500 µm. Furthermore, in this invention, it is also preferable that the electrode be formed by application with the ink-jet method, and in this case, the thickness of the electrode is not limited to the above range, and from the aspect of making thinner electrodes, the thickness of the electrode is 15 µm or less, but preferably within the range of 1-15 µm, and more preferably within the range of 5-15 µm. This is because the electrode can consequently be made thinner, and the battery can also be made thinner, smaller, and lighter. In the event that the thickness of the electrode exceeds 15 µm, it may become difficult to make a thinner electrode. The lower limit of the thickness of the electrode (anode or cathode) is not specifically limited. The thickness of the electrode described here refers to the thickness of the electrode formed on one side of the collector.

The electrolyte layer of this invention is provided with insulating particles as a separator substitute material between the anode and cathode. These have already been explained above. Moreover, the electrolyte may also be contained in the electrode in addition to the electrolyte layer. Depending on the electrolyte layer, anode, and cathode, a different electrolyte may be used, or the same electrolyte may be used. Moreover, a different electrolyte may be used depending on each cell layer (each component of the cell layer).

Incidentally, the polymer matrix for the polymer gel electrolyte that is currently used is preferably ether polymers such as PEO and PPO that have ion conductivity. For this reason, oxidation resistance of the anode is low under high-temperature conditions. Therefore, when an anode material with high oxidation-reduction potential-which is generally used for lithium-ion secondary batteries-is used, it is preferable that the capacity of the cathode be less than that of the facing anode with the electrolyte layer between. When the capacity of the cathode is less than the capacity of the facing anode, an excessive increase in anode potential at the end of charging can be prevented. Here, the capacity of the anode and cathode can be obtained from manufacturing conditions as the theoretical capacity when manufacturing the anode and cathode. Alternatively, the capacity of the completed products may be measured directly.

However, when the capacity of the cathode is less than that of the facing anode, durability of the battery may deteriorate because the cathode potential decreases excessively, so it is necessary to be careful regarding the charging and discharging voltage. For example, it is necessary to be careful so as not to lower durability by setting an appropriate value for the oxidation-reduction potential of the anode active material that uses the mean charging voltage of one cell (cell layer).

As shown in FIG. 3, in the case of bipolar batteries, the insulating seal layer 6' is formed around each electrode for the purpose of preventing contact between collectors, as well as the leaching of electrolytic solution, short-circuits due to a slight irregularity at the edge of the layered electrode, etc.

For the insulating layer, it is sufficient to have sealing properties (sealing performance), heat resistance at the operational temperature of the battery, etc., and for example, epoxy resin, rubber, polyethylene, polypropylene, etc., can be used, but from the aspect of corrosion resistance, ease of manufacturing (film production performance), economical efficiency, etc., epoxy resin is preferable.

A high-current tab may be attached to the collector that constitutes the outermost layer of the electrode as required in the case of bipolar batteries. When used, it is preferable for it to serve as a terminal, and that it be as thin as possible from the aspect of making it thinner. However, since the layered anode, cathode, electrolyte layer, and collector are all weak in mechanical strength, it is preferable to have sufficient strength for holding them from both sides and supporting them. Furthermore, from the aspect of the high-current tab suppressing internal resistance, it can be the that the thickness of the high-current tab preferably be generally 0.1-2 mm.

As for the material for the high-current tab, materials that are used for normal lithium-ion secondary batteries can be used. For example, aluminum, copper, titanium, nickel, stainless steel (SUS), and the alloys thereof, etc., can be used. From the aspect of corrosion resistance, ease of manufacturing, economical efficiency, etc., it is preferable to use aluminum.

As for materials for the anode high-current tab and cathode high-current tab for extracting a current, the same material may be used, or a different material may be used. Furthermore, these anode and cathode high-current tabs may be composed of multiply different layered materials. It is sufficient if the anode and cathode high-current tabs are the same size as the collector, but there is no specific limitation.

As shown in FIG. 4, for the anode lead 8 and the cathode lead 9, well-known leads that are generally used for lithium-ion secondary batteries can be used. For the materials for the positive and cathode leads, materials that are used for normal lithium-ion secondary batteries can be used. For example, aluminum, copper, iron, titanium, nickel, stainless steel (SUS), and the alloys thereof, etc., can be used. From the aspect of corrosion resistance, ease of manufacturing, economical efficiency, etc., it is preferable to use aluminum. From the aspect of suppressing the increase in resistance of the entire electrode lead, it is preferable to use copper. Moreover, in order to improve adhesion of the battery casing to the polymer material, a surface coating layer may be formed. For the surface coating layer, nickel can be used most preferably, but other metal material such as silver and gold can be used as well.

For bipolar batteries, as shown in FIG. 4, it is preferable that the entire battery layered body be seated in a battery casing (battery housing) 10 for the prevention of external shock as well as environment degradation in order to prevent shock from outside and environment degradation when used. For the battery casing, conventional and well-known battery casings such as laminate films in complexes with polymer-metal (also referred to as simply polymer-metal composite laminate films) such as aluminum laminate packs in which the metal is coated with a polymer insulator is preferred.

For the polymer-metal composite laminate films, conventional and well-known films in which metallic films are placed between polymer films to become a single unit with a layer structure can be used without specific limitation. Specifically, they are films having an all-inclusive unit with a layered structure such as a casing protection layer (the outermost layer of laminate) composed of polymer film, a metallic film layer, and a thermal adhesive layer (the innermost layer of laminate) composed of polymer film. In more detail, the polymer-metal composite laminate films used for casing are made by first forming a heat-resistant insulating resin film as a polymer film on both sides of the metallic film, and layering the thermal adhesive insulating film on at least one side of the heat-resistant insulating resin films. In such laminate films, the portion of thermal adhesive insulating film is adhered and fused to form a thermal adhesion part by thermal adhesion with an appropriate method. The metallic film includes aluminum films, etc. Moreover, the insulating resin film includes polyethylene tetraphthalate film (heat-resistant insulating film), nylon film (heat-resistant insulating film), polyethylene film (thermal adhesive insulating film), polypropylene film (thermal adhesive insulating film), etc. However, the casing of this invention is not limited to these.

For such polymer-metal composite laminate films, one pair or one sheet (bag-shaped) of laminate film can easily and reliably be fused by thermal adhesion by way of ultrasonic welding, etc., using thermal adhesive insulating film. Therefore, it is preferable that using such polymer-metal laminate films in this invention, the battery layered body is seated and hermetically sealed by fusing part or all of the surrounding parts by thermal adhesion. In order to maximize the long-term reliability of the battery, metallic films-which are a component of the polymer-metal composite laminate sheet-may be directly fused to each other. To remove or destroy the thermal adhesive resin between the metallic films and fuse the metallic films to each other, ultrasonic welding can be used.

When polymer-metal composite laminate films are used for the battery casing, it is only necessary for the anode and cathode leads to be seated between the thermal adhesion parts and exposed to the outside of the battery casing. Moreover, it is preferable to use polymer-metal composite laminate films that excel in thermal conductivity in that the heat can be transferred effectively from the heat source of the vehicle, and the inside of the battery can be heated rapidly up to the operation temperature of the battery.

Next, in this invention, assembled batteries consisting of the multiple connected lithium-ion batteries described above are possible. In other words, it becomes possible to meet the requirements for the capacity or power of the battery depending on intended use at a relatively low price by making assembled batteries consisting of two or more bipolar batteries of the invention connected serially and/or in parallel.

Specifically, for example, N of these bipolar batteries are connected in parallel, and M among these N bipolar batteries connected in parallel are further connected serially, and these are seated in an assembled battery housing made of metal or resin, thus obtained an assembled battery (N and M are integer numbers equal to or greater than 2). In this case, the number of serial/parallel connections of the bipolar batteries is determined according to intended use. For example, for high-capacity power supply for electric vehicles (EVs), hybrid electric vehicles (HEVs), fuel-cell vehicles, hybrid fuel-cell vehicles, etc., such a combination may be made to apply to the power supply for a vehicle's drive for which high-energy density and high-power density are required. Moreover, the connection between the positive and negative terminals for the assembled battery and the electrode lead of each bipolar battery can be made simply by an electric connection using lead wires, etc. Furthermore, the serial/parallel connection of bipolar batteries can be made simply by a electric connection using an appropriate connection member such as a spacer and a bus bar. Thus, it becomes possible to meet requirements for the capacity and voltage specific for each type of vehicle through a combination of base bipolar batteries. As a result, it becomes possible to easily make selective design for the necessary energy and power output. This eliminates the necessity of designing and producing different bipolar batteries for each type of vehicle, and makes it possible to produce base bipolar batteries in a large scale, leading to cost reduction because of mass production.

Moreover, the assembled battery of this invention is not limited to the abovementioned, as conventional and well-known batteries can suitably be employed. For example, in the assembled battery in this invention, the bipolar batteries of the invention and batteries for which the same voltage as that of the bipolar batteries are maintained by serially connecting the constitutional units of the bipolar batteries-in which the anode and cathode materials are the same as those of the bipolar batteries-may be connected in parallel.

The battery for which the same voltage as that of the bipolar battery is maintained by serially connecting the constitutional units of the bipolar battery-in which the anode and cathode materials are the same as those of the bipolar battery-preferably includes non-bipolar lithium-ion secondary batteries (general lithium-ion secondary batteries). In other words, for batteries that constitute the assembled battery, bipolar batteries of the invention and non-bipolar lithium-ion secondary batteries can be mixed. As a result, it is possible to make an assembled battery in which the respective disadvantages of power-oriented bipolar batteries and energy-oriented standard lithium-ion secondary batteries can be set off by combining them, leading to a reduction in weight and size of the assembled battery. The mix ratio of respective bipolar batteries and non-bipolar lithium-ion secondary batteries is determined according to safe performance and power output performance required for the assembled battery.

In the assembled battery of this invention, various measurement instruments and control instruments can be provided according to intended use without specific limitation; for example, connectors for voltage measurement can be provided to monitor battery voltage.

Moreover, in this invention, it is possible to meet requirements for the capacity or power of the battery according to intended use at a relatively low price without the necessity of newly making assembled batteries, by making combined assembled batteries in which two or more of the assembled batteries are connected serially and/or in parallel. In other words, in these combined assembled batteries, two or more of the assembled batteries are connected serially and/or in parallel, so the specification of the assembled battery can be tuned by manufacturing standard assembled batteries and combining them to make combined assembled batteries. As a result, it is not necessary to manufacture various assembled batteries with different specifications, leading to the reduction of cost for combined assembled batteries. Thus, the combined assembled batteries in which multiple assembled batteries are connected serially and/or in parallel can be repaired simply by replacing the failed parts when some batteries or the assembled batteries fail. Here, the assembled battery may consist of only the bipolar batteries of this invention or may consist of both the bipolar batteries of this invention and other non-bipolar batteries.

In this invention, it is possible for vehicles to have the bipolar battery and/or assembled battery (including a combined assembled battery) installed as a power supply for the drive. The bipolar battery and/or assembled battery of this invention have various characteristics as described above, and in particular, they are compact. Therefore, they are suitable as a power supply for the drive in vehicles for which requirements for energy density and power density are particularly strict, such as electric vehicles, hybrid electric vehicles, fuel-cell vehicles, and hybrid fuel-cell vehicles. For example, it is convenient to install an assembled battery as a power supply for the drive under the seat in the center of the vehicle body of an electric vehicle or a hybrid electric vehicle, because the room inside the vehicle and the trunk room can be more spacious. In this invention, there is no limitation: it may be installed under the rear trunk space, etc., or when there is no engine, as in electric vehicles and fuel-cell vehicles, it may installed in the space in the front of the vehicle, where an engine would otherwise be mounted. In this invention, not only an assembled battery 15 but also a bipolar battery may be installed according to intended use, or the assembled battery 15 and bipolar battery may be mounted together. Moreover, vehicles that can have a bipolar battery and/or the assembled battery of this invention installed as a power supply for the drive preferably includes, but is not limited to, the electric vehicles, hybrid electric vehicles, fuel-cell vehicles, and hybrid fuel-cell vehicles.

For the manufacturing method of the bipolar battery of this invention, conventional and well-known materials can be used without any specific limitation. A brief explanation will be given below. However, an explanation of the method for placing insulating particles as a separator substitute material using an ink-jet printer is omitted here, because it is the same as described in FIGS. 5-7.

First, an appropriate collector is prepared. Usually, the anode composition is obtained as slurry (anode slurry) or ink (anode ink) and applied on one side of the collector. The application method includes coating with a coater or spray coating using anode slurry, screen printing using anode ink, the ink-jet printing application method, etc. Here, also for the collector, coating with a coater or spray coating using collector slurry, screen printing using anode ink, the ink-jet printing application method, etc., may be applied.

The anode slurry or ink is a solution containing an anode active material. Other than that, conductive auxiliaries, binder, polymerization initiator, raw materials for polymer gel electrolyte (polymer raw materials, electrolytic solution, etc.), and lithium salt may be contained optionally. Since a polymer gel electrolyte is used for the polymer electrolyte layer, it is sufficient if a conventional and well-known binder for binding anode active material microparticles to each other, conductive auxiliaries for improving electron conductivity, slurry viscosity adjustment solvent such as N-methyl-2-pyrrolidone (NMP), etc., are contained, and raw materials for polymer gel electrolyte and lithium salt may not necessarily be contained.

Polymer raw materials for the polymer gel electrolyte include PEO, PPO and the copolymer thereof, and preferably, they have a cross-linking functional group (e.g., carbon-carbon double bond) in the molecule. By cross-linking the polymer raw materials using this cross-linking functional group, mechanical strength can be improved.

For the anode active material, conductive auxiliaries, binder, lithium salt, electrolytic solution, and the compound can be used.

The polymerization initiator should be selected according to the compound to be polymerized. For example, benzyl dimethyl ketal and azobis isobutyronitrile can be selected as a photo polymerization initiator and a thermal polymerization initiator, respectively. A solvent such as NMP is selected depending on the type of the anode slurry or ink.

The amount to be added of the anode active material, lithium salt, conductive auxiliaries, etc., can be adjusted according to intended use of the bipolar battery, and the amount that is generally used can be added. The amount of polymerization initiator to be added is determined according to the number of cross-linking functional groups contained in the polymer raw material. Generally, it is approximately 0.01-1 % by weight to the polymer raw material.

The anode is formed as follows. The collector on which the anode slurry or ink is applied is dried, and the contained solvent is removed to form the anode. At the same time, depending on the anode slurry or ink, it is possible to advance the cross-linking reaction to increase the mechanical strength of the polymer solid electrolyte. For drying, a vacuum dryer can be used. The drying condition is determined according to the anode slurry applied and cannot be determined uniquely, but it is generally 5 minutes-20 hours at 40-150°C.

In this invention, when forming the anode, as described above, it is preferably formed using printing application method with the anode ink, and more preferably formed using the ink-jet application method. In such a case, for the anode ink, the anode slurry may be used directly, or it may be divided into several inks with different components and concentrations for use. For example, when the anode is formed through application by being divided into an active material layer, conductive auxiliaries layer, and electrolyte layer, the ink may be divided into three, i.e., active material ink (active material, binder, electrolyte, etc.), conductive auxiliaries ink (conductive auxiliaries, binder, etc.), and electrolyte part ink (electrolyte, binder, etc.). This is because, as in the case of the electrolyte layer, an electrode material such as anode active material and conductive auxiliaries can be formed in alignment, and even in complex and fine alignment (arrangement pattern), a highly elaborate alignment (arrangement pattern) can be formed without a deterioration in productivity. Therefore, this can become a highly advantageous formation means in the case of layering dozens to hundreds of cell layers, for example. Here, an explanation of the ink-jet printing application method is omitted, because it is explained in detail in the method for forming the electrolyte layer. However, it is obvious that, in this invention, the anode can be formed using conventional and well-known ink-jet techniques accordingly, without being limited to the method for forming the electrolyte layer.

The cathode composition (cathode slurry) containing the cathode active material is applied on the side opposite to the side on which the anode was formed. Cathode slurry is a solution containing a cathode active material. Other than that, conductive auxiliaries, binder, polymerization initiator, raw materials for polymer gel electrolyte (polymer raw materials, electrolytic solution, etc.), and lithium salt, etc., may optionally be contained. An explanation of the raw material to be used and amount to be added, etc., is omitted here, because it is the same as the explanation of the application of anode composition.

The collector on which the cathode slurry is applied is dried, and the contained solvent is removed to form the cathode. At the same time, depending on the cathode slurry, it is possible to advance the cross-linking reaction to increase the mechanical strength of the polymer gel electrolyte. Through these steps, the bipolar electrode will be completed. For drying, a vacuum dryer can be used. The drying condition is determined according to the cathode slurry applied and cannot be determined uniquely, but it is generally 5 minutes-20 hours at 40-150°C.

The electrolyte layer, which is layered between the electrodes, in which the polymer gel electrolyte is held in the separator and the resin for sealing is molded and placed on the periphery of the portion of the polymer gel electrolyte held in the separator, is prepared separately. The electrolyte layer can be prepared according to the procedure explained using FIG. 5 (refer also to FIGS. 6-12).

After fully drying the bipolar electrode prepared as above by heating under high vacuum, multiple pieces of bipolar electrode and the electrolyte layer are respectively cut out to appropriate size. It is preferable to make the electrolyte layer slightly larger than the size of the collector of the bipolar electrode (refer to FIG. 11). A given number of bipolar electrodes and the electrolyte layers that are cut out are bonded to each other to prepare the battery layered body. The number of layers is determined in consideration of the battery performance required for the bipolar battery. It is also possible to directly attach the bipolar electrode on one side or both sides on which the electrolyte layer is formed. The electrode for extracting current is placed on each of the outermost electrolyte layers. The electrode for extracting current in which only the anode is formed on the collector is placed on the outermost layer on the anode side. The electrode for extracting current in which only the cathode is formed on the collector is placed on the outermost layer on the cathode side. Preferably, the step for layering the bipolar electrode and the electrolyte layer to obtain the bipolar battery is carried out in an inert atmosphere. For example, it is preferred that the bipolar battery be made in an argon atmosphere or nitrogen atmosphere.

Finally, the anode high-current tab and the cathode high-current tab are placed on the respective collectors for extracting current on both of the outermost layers of the battery-layered body, and furthermore, the anode lead and cathode lead are fused (electrically connected) to the anode high-current tab and cathode high-current tab, respectively. In this case, it is preferable that the electrode for extracting a current, in particular the high-current tab, is larger than the sealing part of the separator in which the seal member is placed. For the method for fusing the anode lead and cathode lead, there is no specific limitation, and preferably, ultrasonic welding, in which the welding temperature is low, can be used; however, it is not limited to this, so conventional and well-known method for jointing can be used accordingly.

The entire battery-layered body is enclosed in a battery casing or battery housing to prevent external shock and environmental degradation, and thereby, the bipolar battery is completed. As materials for the battery casing (battery housing), metals (aluminum, stainless, nickel, copper, etc.) in which the inner surface is coated with insulators such as polypropylene films are suitable.

Below, this invention is described in further detail using embodiments and comparative examples. However, the technical scope of this invention is not limited to the following embodiment.

In the following embodiment, the electrodes (anode and cathode) described in section A, below, and insulating particle ink 1 are used in a liquid electrolytic battery. Furthermore, the electrodes (anode and cathode) described in section B, below, and insulating particle ink 2, insulating particle ink 3, or electrolyte ink and insulating particle ink 4 are used in a polymer gel electrolytic polymer battery.

A. Liquid Electrolytic Battery. The anode and cathode below are coated with a conventional coater. The following materials are mixed in predetermined proportions to make anode slurry. First, anode slurry is made by mixing materials in the following proportions: LiMn₂O₄ spinel with a mean particle diameter of 20 µm as the anode active material [85wt%], acetylene black as the conductive agent [5wt%], PVDF (Polyvinylidene Fluoride) as the binder [10wt%], and N-Methyl-2-pyrrolidone (NMP) as the slurry viscosity-modifying agent. Because the abovementioned NMP is completely volatilized and removed during electrode drying, an appropriate amount is added to achieve suitable slurry viscosity without electrode composite material. Furthermore, the abovementioned proportions are shown as calculated by components, with the exception of the slurry viscosity-modifying solvent.

After using a coater to apply the abovementioned anode slurry to one side of SUS foil [20 µm thick], which acts as an anode collector, and placing it into a vacuum oven, it is press dried at 120°C for 10 minutes to form a 40-µm-thick anode.

The following materials were mixed in predetermined proportions to make cathode slurry. First, cathode slurry is made by mixing the following materials in their designated proportions: hard carbon [90wt%] with a mean particle diameter of 20 µm as the cathode active material, PVDF [10wt%] as the binder, and NMP as the slurry viscosity-modifying agent. Because the abovementioned NMP is completely volatilized and removed during electrode drying, an appropriate amount is added to achieve suitable slurry viscosity without electrode composite material. Furthermore, the abovementioned proportions are shown as calculated by components, with the exception of the slurry viscosity-modifying solvent.

After using a coater to apply the abovementioned cathode slurry to one side of the SUS foil [20 µm thick], which acts as a cathode collector, and placing it into a vacuum oven, it is press dried at 120°C for 10 minutes to form a 40-µm-thick cathode.

As insulating particles, 30wt% SiO₂ particles with a mean particle diameter of 1 µm are sprinkled into the solution of 70wt% acetronitrile to prepare a solvent (insulating particle ink 1). Viscosity of the insulating particle ink 1 at this time is 2 cP.

**B. Polymer Gel Electrolytic Polymer Battery.** The following anode and cathode are coated by a conventional coater. The following materials are mixed in predetermined proportions to make anode slurry. First, anode slurry is made by mixing the following materials in the amounts designated: Li-Mn₂O₄ spinel with a mean particle diameter of 20 µm as the anode active material [22wt%], acetylene black as the electrical conduction agent [6wt%], polyethylene oxide (PEO) as the polymer source material (polymer) polymer gel electrolytic material [18wt%], Li (C₂F₅SO₂) 2N as the supporting salt (lithium salt) of polymer gel electrolytic material [9wt%], NMP as the slurry viscosity-modifying agent [45wt%], and Azobis-Isobutyronitrile (AIBN) as the polymerization initiator [trace amount; 0.1wt% for the polymer].

After using a coater to apply the abovementioned anode slurry to one side of the SUS foil [20 µm thick], which acts as an anode collector, and placing it into a vacuum oven, it is press dried at 120°C for 10 minutes to form a 40- µm-thick anode.

The following materials are mixed in predetermined proportions to make cathode slurry. First, cathode slurry is made by mixing the following materials in their designated proportions: hard carbon with a mean particle diameter of 20 µm as the cathode active material [14wt%], acetylene black as the electrical conduction agent [4wt%], PEO as the polymer source material (polymer) of polymer gel electrolytic material [20wt%], Li (C₂F₅SO₂) 2N as the supporting salt (lithium salt) of polymer gel electrolytic material [11wt%], NMP as the slurry viscosity-modifying agent [51wt%], and AIBN as the polymerization initiator [trace amount; 0.1wt% for the polymer].

After using a coater to apply the cathode slurry to one side of the SUS foil [20 µm thick], which acts as a cathode collector, and placing it into a vacuum oven, it is press dried at 120°C for 10 minutes to form a 40-µm-thick cathode.

The solution (insulating particle ink 2) is prepared by adding 13wt% of ethylene oxide and propylene oxide macromer as the polymer source material (polymer) of polymer gel electrolytic material, 6wt% of lithium bis (perfluoroethylsulfonylimide) (LiBETI) as the lithium salt of polymer gel electrolytic material, benzyl dimethyl ketal as the polymerization initiator of polymer gel electrolytic material to 0.1 wt% of polymer source material and sprinkling 10wt% of SiO₂ particles with a mean particle diameter of 1 µm as insulating microparticles into 70wt% of acetonitrile as the solvent. The viscosity of the insulating particle ink 2 at that time is 3 cP. This insulating particle ink 2 is adjusted by blending the ratio of polymer gel electrolyte (polymer) and insulating particles so that the porosity of interstitial spacess between the insulating particles provided between the anode and cathode of the battery becomes 70%.

The solution (insulating particle ink 3) is prepared by adding 10wt% of ethylene oxide and propylene oxide macromer as the polymer source material (polymer) of the polymer gel electrolytic material, 4wt% of LiBETI as lithium salt of the polymer gel electrolytic material, and benzyl dimethyl ketal as the polymerization initiator of the polymer gel electrolytic material to 0.1wt% of polymer source material and sprinkling 20wt% of polypropylene (PP) particles with a mean particle diameter of 5 µm as insulating microparticles to 65wt% of acetonitrile as the solvent. The viscosity of the insulating particle ink 3 at this time is 5 cP. This insulating particle ink 3 is adjusted beforehand by blending ratios of polymer gel electrolyte (polymer) and insulating particles so that porosity of the interstitial spaces between insulating particles provided between the anode and cathode of the battery becomes 70%.

The solution (insulating particle ink 4) is prepared by sprinkling 30wt% of SiO₂ particles with a mean particle diameter of 0.1 µm as insulating microparticles into 70wt% of acetonitrile as the solvent.

Adjustment of the polymer gel electrolytic ink is carried out as follows: First, the solution (polymer gel electrolytic ink) is prepared by adding 15wt% of ethylene oxide and propylene oxide macromer as polymer source material (polymer) of the polymer gel electrolytic material, 8wt% of LiBETI as lithium salt of the polymer gel electrolytic material, and benzyl dimethyl ketal as the polymerization initiator of the polymer gel electrolytic material to 0.1wt% of the polymer source material, using 77wt% of acetonitrile as the solvent. The viscosity of the polymer gel electrolytic ink at this time is 2 cP.

**Embodiment 1.** The battery with liquid electrolyte is mapped using the anode, cathode, and insulating particle ink 1 described in section A (liquid electrolyte battery). First, insulating particle ink 1, adjusted as described in section A, is coated on one side of the anode mapped as described in section A to form a 3-µm-thick insulating particle layer on the anode. For the insulating particle layer, insulating particles are placed on the anode using an ink-jet printer so that porosity of the interstitial spaces between the insulating particles provided between the anode and cathode becomes 70%. Furthermore, insulating particles are formed by coating using an ink-jet printer in the arrangement shown in FIG. 6A.

Specifically, the procedure is carried out as follows using prepared insulating particle ink 1 and a commercially available ink-jet printer. In addition, when the abovementioned insulating particle ink 1 is used, there is a problem in which acetonitrile, which is a solvent, completely dissolves plastic parts that are on the ink-jet printer ink feeder. Thus, printing is done by a printer with the following modifications. In other words, plastic parts on the ink feeder are replaced with metallic parts, and ink is directly supplied from the ink holder to the metallic parts. Furthermore, insulating particles are sprinkled uniformly in the ink, and to ensure that the insulating particles do not settle, the ink holder is continuously agitated with rotary blades. Moreover, the ink-jet printer is controlled by a commercially available computer and software. In this embodiment, the insulating particle layer (conventional separator or electrolyte layer) is applied in an ultra-thin film to a thickness of 3 µm which had not been possible previously.

First, feeding insulating particle ink 1 into a modified ink-jet printer, a pattern (applied as shown in FIG. 6A for this embodiment) created by computer is applied on the anode. After application, drying is done in a vacuum oven for 12 hours at 120°C to dry the solvent, and the insulating particles are fixed to the anode, completing the insulating particle layer.

Next, the insulating particle layer is formed on the abovementioned anode, the cathode that is mapped as in abovementioned A is laminated, electrolyte is injected, and the battery is stored in a laminate pack as the battery casing to create a liquid electrolyte battery. In addition, a concentration of 1 mol/liter of LiPF₆ is included in the abovementioned electrolyte, using a solvent mixing ethylene carbonate (EC) and dimethyl carbonate (DMC) at a volume fraction of 3:7. Furthermore, in the abovementioned laminate pack, aluminum is used after being laminated with polypropylene film.

**Embodiment 2**. The polymer gel electrolytic polymer battery is mapped using the anode, cathode, and insulating particle ink 3 described in section B (polymer battery). First, one side of the anode mapped as described in section B is simultaneously coated with insulating particles and polymer gel electrolyte (electrolyte polymer), using insulating particle ink 3 adjusted as described in section B, to form a 5-µm-thick electrolyte layer on the anode. Using a coater, the abovementioned electrolyte layer is coated with insulating particle ink 3 prepared beforehand so that porosity becomes 70%. The electrolyte layer of this embodiment is coated to form an ultra-thin film with a thickness of 5 µm, which had not been possible previously.

After coating, drying and polymerization are performed for 12 hours at 120°C under vacuum pressure while exposed to ultraviolet light amidst black light to dry the solvent and induce polymerization (chemical cross-linking), and insulating particles are fixed on the anode and in the electrolyte layer to complete the electrolyte layer. Next, an electrolyte layer is formed on the abovementioned anode, the cathode mapped as in abovementioned B is laminated and stored in a laminate pack as the battery casing to form a polymer gel electrolytic polymer battery. In addition, in the abovementioned laminate pack, aluminum is used after being laminated with polypropylene film.

**Embodiment 3**. A polymer gel electrolytic polymer battery is mapped using the anode, cathode, and insulating particle ink 2 described in section B (polymer battery). First, using insulating particle ink 2 adjusted as described in section B, insulating particles and polymer gel electrolyte (electrolyte polymer) are simultaneously coated on one side of the anode mapped as described in section B to form a 3-µm-thick electrolyte layer on the anode. Using insulating particle ink 2 prepared beforehand so that porosity becomes 70%, the abovementioned electrolyte layer is formed by placing insulating particles (and at the same time, polymer gel electrolyte) on the anode by means of an ink-jet printer. Specifically, it is formed by applying insulating particles in the arrangement shown in FIG. 5D by means of an ink-jet printer.

Specifically, the following procedure is carried out using a prepared insulating particle ink 2 and a commercially available ink-jet printer. In addition, when the abovementioned insulating particle ink 2 is used, there is a problem in which acetonitrile, which is a solvent, dissolves the plastic parts in the ink-jet printer ink feeder. Therefore, printing is done by a printer with the following modifications. In other words, parts in the ink feeder are replaced with metallic parts, and ink is supplied directly to the metallic parts. Furthermore, insulating particles are uniformly sprinkled in the ink, and to ensure that the insulating particles do not settle, the ink holder is continuously agitated using rotary blades. Furthermore, the ink-jet printer is controlled by a commercially available computer and software. In this embodiment, a 3-µm-thick electrolyte layer is applied to form an ultra-thin film previously not possible.

First, insulating particle ink 2 is adopted in a modified ink-jet printer, and a pattern (this embodiment is printed as shown in FIG. 5D) created by computer is applied by printing on the anode. After printing, to dry the solvent and induce polymerization (chemical cross-linking), drying and polymerization is carried out for 12 hours at 120°C under vacuum pressure while exposing to ultraviolet light amidst a black light, and the insulating particles are fixed onto the anode and within the electrolyte layer to complete the electrolyte layer.

Next, an electrolyte layer is formed on the abovementioned anode, the cathode mapped as in abovementioned B is laminated and stored in a laminate pack as the battery casing to form a polymer gel electrolytic polymer battery. In addition, in the abovementioned laminate pack, aluminum is used laminated by a polypropylene film.

Embodiment 4. A polymer gel electrolytic polymer battery is mapped using the anode, cathode, insulating particle ink 4, and electrolyte ink described in section B (polymer battery).

First, insulating particles and polymer gel electrolyte (electrolyte polymer) are separately applied to one side of the anode mapped as in abovementioned B, using the insulating particle ink 4 and electrolyte ink adjusted as in abovementioned B, to form a 1-µm-thick electrolyte layer on the anode. The abovementioned electrolyte layer is formed by separately distributing insulating particles and polymer gel electrolyte on the anode by means of an ink-jet printer using insulating particle ink 4 and electrolyte ink so that the porosity of the interstitial spacess between the insulating particles provided between the anode and cathode becomes 70%. Specifically, using an ink-jet printer, insulating particles and polymer gel electrolyte are formed by applying the arrangement shown in FIG. 5B.

Specifically, this is carried out by the following procedure using prepared insulating particle ink 4, electrolyte ink, and a commercially available ink-jet printer. In addition, when the abovementioned insulating particle ink 4 and electrolyte ink are used, there is a problem in which acetonitrile, which is a solvent, dissolves the plastic parts in each ink feeder of the two ink cartridges of the ink-jet printer. Therefore, printing is carried out by a printer in which the following modifications have been made. In other words, parts in each ink feeder are replaced with metallic parts, and insulating particle ink 4 as well as electrolyte ink are variously supplied directly from each ink holder to each metallic part. Furthermore, insulating particles are uniformly sprinkled in insulating particle ink 4, and to ensure that the insulating particles do not settle, the ink holder for the insulating particle ink 4 is continuously agitated using rotary blades. Moreover, the ink-jet printer is controlled by a commercially available computer and software. In this embodiment, the electrolyte layer is printed as a 1-µm-thick ultra-thin film, which was not previously achievable.

First, insulating particle ink 4 and electrolyte ink are separately fed into the two ink cartridges of the modified ink-jet printer, and a pattern (printed as shown in FIG. 5B of this embodiment) created on a computer is printed onto the anode using insulating particle ink 4 and electrolyte ink. After printing, to dry the solvent and induce polymerization (chemical cross-linking), drying and polymerization are carried out for 12 hours at 120°C under vacuum pressure while exposing to ultraviolet light amidst black light, and the insulating particles are fixed onto the anode and within the electrolyte layer, thereby completing the electrolyte layer.

Next, an electrolyte layer is formed on the abovementioned anode, and the cathode mapped as in abovementioned B is laminated and stored in a laminate pack as the battery casing to form a polymer gel electrolytic polymer battery. In addition, in the abovementioned laminate pack, aluminum that has been laminated by polypropylene film is used.

**Comparative Example 1**. For comparative examples, a polymer gel electrolyte-type polymer battery (See FIG. 5C) using conventional separators with minimum thickness, which does not have insulating microparticles as the substitute separator material, was formed.

Specifically, electrolyte ink described in section B was applied to impregnate a porous membrane separator with a PE single layer construction having 40% porosity and 15-µm thickness as a conventional separator, and was dried to form a 15-µm-thick electrolyte layer.

Next, sequentially laminate the anode described in section B, the electrolyte layer, and the cathode described in section B, and store them in a laminate pack as the battery casing to form a polymer gel electrolytic polymer battery.

### Evaluation.

**1. Battery Pressure Test.** The barrel of the battery (central section of the battery) is subjected to 5 kg/cm² of pressure, and the battery is checked for short-circuiting due to contact between the anode and cathode.
**2**. **Charge-Discharge Cycle Test**. Charge-discharge cycle tests are performed in (100) cycles on various batteries mapped according to Embodiments 1-4 and Comparative Example 1. Conditions for the cycle in the charge-discharge cycle test consist of charging by IC constant electric current up to 4.2 V, pausing for 10 minutes, discharging by IC constant electric current to 2.5 V, and pausing for 10 minutes to complete one cycle. Testing is performed at room temperature (approx. 25°C) without controlling the temperature.
**3. Evaluation of Output Characteristics.** The battery voltage was charged to 3.7 V, a discharge current appropriate for 1C, 2C, and 3C was applied, and the output was estimated based on internal resistance calculated from the drop in voltage at that time. At that time, the battery was operated at a temperature of 25°C in a thermostatic chamber.
**4**. **Evaluation Results.** In the battery pressure test using the conventional separator in Comparative Example 1, it was confirmed that the separator functioned, the anode and cathode did not come into contact, and problems such as short-circuiting did not occur.

Furthermore, using the conventional separator in Comparative Example 1, battery output characteristics are checked to see whether output is lower compared to the batteries in Embodiments 1-4, which have greater internal resistance, because the electrolyte layer is thicker than that of the batteries in Embodiments 1-4.

Furthermore, durability of the conventional separator was sufficient; by the end of the charge-discharge test of the constant current cycle, there was no contact between the anode and cathode, and internal short-circuiting did not occur.

For batteries in Embodiments 1-4, regardless of being able to achieve an ultra-thin film electrolyte layer (or distance between electrodes) that is impossible for conventional separators, we were able to confirm the achievement of functions as a separator. In other words, even when subjecting the battery to 5 kg/cm² of pressure, there was no contact between the anode and cathode, and no problems such as short-circuiting occurred.

Furthermore, even though the ultra-thin film electrolyte layer (or distance between electrodes) is dramatically thinner than a conventional separator, the durability performance of separator substitute materials was as good as that of a conventional separator, and the anode and cathode did not come into contact and internal short-circuiting did not occur until completion of 100 cycles of the charge-discharge test, as insulating particles maintained sufficient separator functions.

Various embodiments of the invention have been described. These and other embodiments are within the scope of the following claims.

## Claims

1. A lithium ion battery comprising:
a cathode;
an anode; and
an electrolyte layer formed between the cathode and the anode,
wherein the cathode, the anode, and the electrolyte layer constitute a cell element, and the electrolyte layer comprises an arrangement of insulating particles with a plurality of interstitial spaces therebetween, with electrolytes occupying at least some of the interstitial spaces, **characterized by** the insulating particles comprising a light metal, iron or stainless steel coated with an olefin resin or an inorganic oxide.

2. A battery according to claim 1, wherein the insulating particles are placed between the cathode and the anode so that the facing sides of the cathode and the anode do not contact each other.

3. A battery according to claim 1, wherein a void ratio of the interstitial spaces to the insulating particles in the electrolyte layer is 50-90%.

4. A battery according to claim 1, wherein a mean radius of the insulating particles is 0.05-10 µm.

5. A battery according to claim 1, wherein a thickness of the electrolyte layer is 10 µm or less.

6. A battery according to claim 1, wherein the electrolyte layer is a solid electrolyte layer.

7. A battery according to claim 1, wherein the cathode comprises a cathode active material that is formed using lithium-transition metal composite oxides, and wherein the anode comprises an anode active material that is formed using carbon- or lithium-transition metal composite oxides.

8. A method for manufacturing a battery comprising:
applying insulating particles and an electrolytic polymer to form an electrolyte layer, wherein the electrolytic polymer occupies at least some of a plurality of interstitial spaces between the insulating particles; and
layering the electrolyte layer between a cathode and an anode, wherein the cathode and the anode are facing each other, the insulating particles comprising a light metal, iron or stainless steel coated with an olefin resin or an inorganic oxide.

9. The method according to claim 8, wherein the electrolyte layer is formed by applying the insulating particles and the electrolytic polymer through a nozzle of an ink-jet printer.

10. The method according to claim 8, wherein the insulating particles and electrolytic polymer are applied simultaneously to form a solid electrolyte battery.

11. The method according to claim 8, wherein the insulating particles and electrolytic polymer are applied separately to form a solid electrolyte battery.

12. The method according to claim 8, wherein the thickness of the electrolyte layer is 10 µm or less.

## Patentansprüche

1. Lithiumionenbatterie, umfassend:
eine Kathode;
eine Anode; und
eine Elektrolytschicht, die zwischen der Kathode und der Anode ausgebildet ist,
wobei die Kathode, die Anode und die Elektrolytschicht ein Zellelement bilden, und die Elektrolytschicht eine Anordnung von isolierenden Partikeln mit einer Vielzahl von Zwischenräumen zwischen diesen umfasst, wobei die Elektrolyte, die zumindest einige der Zwischenräume besetzen, **gekennzeichnet durch**
die isolierenden Partikel, die ein Leichtmetall, Eisen oder Edelstahl, der mit einem Olefinharz beschichtet ist, oder ein anorganisches Oxid umfassen.

2. Batterie nach Anspruch 1, wobei die isolierenden Partikel zwischen der Kathode und der Anode derart platziert sind, dass die einander gegenüberliegenden Seiten der Kathode und der Anode einander nicht berühren.

3. Batterie nach Anspruch 1, wobei ein Hohlraumverhältnis der Zwischenräume zu den isolierenden Partikeln in der Elektrolytschicht 50-90 % beträgt.

4. Batterie nach Anspruch 1, wobei ein mittlerer Radius der isolierenden Partikel 0.05-10 µm beträgt.

5. Batterie nach Anspruch 1, wobei die Dicke der Elektrolytschicht 10 µm oder weniger beträgt.

6. Batterie nach Anspruch 1, wobei die Elektrolytschicht eine Festelektrolytschicht ist.

7. Batterie nach Anspruch 1, wobei die Kathode ein Kathodenaktivmaterial, das unter Verwendung eines Lithium-Übergangsmetallmischoxids gebildet ist, umfasst, und wobei die Anode ein anodenaktives Material, das unter Verwendung eines Kohlenstoff- oder Lithium-Übergangsmetallmischoxids gebildet ist, umfasst.

8. Verfahren zur Herstellung einer Batterie, umfassend:
Aufbringen von isolierenden Partikeln und einem Elektrolytpolymer, um eine Elektrolytschicht zu bilden, wobei das Elektrolytpolymer mindestens einige einer Vielzahl von Zwischenräumen zwischen den isolierenden Partikeln besetzt; und
Schichten der Elektrolytschicht zwischen einer Kathode und einer Anode, wobei die Kathode und die Anode einander gegenüberliegen, die isolierenden Partikel ein Leichtmetall, Eisen oder Edelstahl, der mit einem Olefinharz beschichtet ist, oder ein anorganisches Oxid umfassen.

9. Verfahren nach Anspruch 8, wobei die Elektrolytschicht durch das Aufbringen der isolierenden Partikel und des Elektrolytpolymers durch eine Düse eines Tintenstrahldruckers gebildet wird.

10. Verfahren nach Anspruch 8, wobei die isolierenden Partikel und das Elektrolytpolymer gleichzeitig aufgetragen werden, um eine Festelektrolytbatterie zu bilden.

11. Verfahren nach Anspruch 8, wobei die isolierenden Partikel und das Elektrolytpolymer separat aufgetragen werden, um eine Festelektrolytbatterie zu bilden.

12. Verfahren nach Anspruch 8, wobei die Dicke der Elektrolytschicht 10 µm oder weniger beträgt.

## Revendications

1. Batterie au lithium-ion comprenant :
une cathode ;
une anode ; et
une couche d'électrolytes formée entre la cathode et l'anode,
dans laquelle la cathode, l'anode et la couche d'électrolytes constituent un élément de cellule, et
la couche d'électrolytes comprend un agencement de particules isolantes avec une pluralité d'espaces interstitiels entre elles, avec des électrolytes occupant au moins certains des espaces interstitiels, **caractérisée en ce que**
les particules isolantes comprennent un métal léger, du fer ou de l'acier inoxydable revêtu d'une résine oléfinique ou d'un oxyde inorganique.

2. Batterie selon la revendication 1, dans laquelle les particules isolantes sont placées entre la cathode et l'anode de sorte que les côtés se faisant face de la cathode et de l'anode n'entrent pas en contact l'un avec l'autre.

3. Batterie selon la revendication 1, dans laquelle un rapport de vide des espaces interstitiels par rapport aux particules isolantes dans la couche d'électrolytes est compris entre 50 et 90%.

4. Batterie selon la revendication 1, dans laquelle un rayon moyen des particules isolantes est compris entre 0,05 et 10 µm.

5. Batterie selon la revendication 1, dans laquelle l'épaisseur de la couche d'électrolytes est inférieure ou égale à 10 µm.

6. Batterie selon la revendication 1, dans laquelle la couche d'électrolytes est une couche d'électrolytes solides.

7. Batterie selon la revendication 1, dans laquelle la cathode comprend un matériau actif de cathode qui est formé en utilisant des oxydes composites de métal de transition-lithium, et dans laquelle l'anode comprend un matériau actif d'anode qui est formé en utilisant des oxydes composites de métal de transition-carbone ou -lithium.

8. Procédé pour fabriquer une batterie comprenant le fait :
d'appliquer des particules isolantes et un polymère électrolytique pour former une couche d'électrolytes, dans lequel le polymère électrolytique occupe au moins certains d'une pluralité d'espaces interstitiels entre les particules isolantes ; et
de disposer en couches la couche d'électrolytes entre une cathode et une anode, dans lequel la cathode et l'anode se font face, les particules isolantes comprenant un métal léger, du fer ou de l'acier inoxydable revêtu d'une résine oléfinique ou d'un oxyde inorganique.

9. Procédé selon la revendication 8, dans lequel la couche d'électrolytes est formée en appliquant les particules isolantes et le polymère électrolytique par une buse d'une imprimante à jet d'encre.

10. Procédé selon la revendication 8, dans lequel les particules isolantes et le polymère électrolytique sont appliqués simultanément pour former une batterie à électrolytes solides.

11. Procédé selon la revendication 8, dans lequel les particules isolantes et le polymère électrolytique sont appliqués séparément pour former une batterie à électrolytes solides.

12. Procédé selon la revendication 8, dans lequel l'épaisseur de la couche d'électrolytes est inférieure ou égale à 10 µm.
